# EUROPEAN PATENT APPLICATION

(11) **EP 4 248 725 A1**
(43) Date of publication of application: **27.09.2023**
(21) Application number: 23156184.6
(22) Date of filing: 10.02.2023
(51) Int. Cl.: A01B 69/00

(54) **WORK MACHINE CONTROL METHOD, WORK MACHINE CONTROL PROGRAM, AND WORK MACHINE**

(30) Priority: 23.03.2022 JP 2022046860
(71) Applicant: Yanmar Holdings Co., Ltd., Osaka-shi, Osaka (JP)
(72) Inventor: KUDO, Junko, Osaka (JP)
(74) Representative: Novagraaf International SA

(57) **Abstract**

[Problem] To provide a work machine control method, work machine control program, and work machine that facilitates improving especially operability in turning a base machine.

[Solution] A method for controlling a work machine that includes a traveling unit 11 that has a pair of crawlers 111 aligned in a left-and-right direction includes: acquiring an operation signal from an operating device 8; and applying at least one of a first mode and a second mode, and controlling the traveling unit 11 in accordance with the operation signal. The operating device 8 includes: a first operating unit 81 configured to move a base machine of the work machine forward and backward; and a second operating unit 82 configured to turn the base machine to the left and to the right. The first mode is a mode in which an operation on the second operating unit 82 is disabled upon the first operating unit 81 being unoperated. The second mode is a mode in which the base machine rotates in the same direction in plan view in response to the same operation on the second operating unit 82 both upon moving forward and upon moving backward.

## Description

### TECHNICAL FIELD

The present disclosure relates to a work machine control method, work machine control program, and work machine that executes work.

### BACKGROUND ART

As a related technology, a work machine (farm work vehicle) is known which includes a traveling unit (crawler traveling unit) having a pair of crawlers aligned in a left-and-right direction, a base machine (a left vehicle body and a right vehicle body), an engine, and work units (chemical spraying units) (refer to, for example, Patent Document 1). In the work machine according to the related technology, the pair of crawlers of the traveling unit travels in such a manner as to sandwich plants being spray targets in the left-and-right direction. The left vehicle body of the base machine is mainly supported by the left crawler. The right vehicle body of the base machine is mainly supported by the right crawler. The engine is placed in the left vehicle body.

In the work machine according to the related technology, the work units are provided to the left vehicle body and the right vehicle body, respectively. Each of the work units sprays a chemical both rightward and leftward. Consequently, the work machine according to the related technology can simultaneously spray the chemical onto plants passing between the pair of left and right crawlers, plants located to the left of the work machine, and plants located to the right of the work machine. The work machine can spray the chemical onto plants while traveling autonomously on the basis of a current position and an autonomous travel path. In this work machine, the base machine can be turned by making the driving speeds of the left and right crawlers different. Moreover, the base machine can be turned (spin-turned) without changing a position thereof by making the driving directions of the left and right crawlers different.

### PRIOR ART DOCUMENT

### PATENT DOCUMENT

Patent Document 1: JP-A-2020 -152285

### SUMMARY OF INVENTION

### TECHNICAL PROBLEM

In the above related technology, for example, a situation is conceivable in which the work machine is moved from, for example, a storage where the work machine is stored to a start position of autonomous travel under the control (for example, remote control) of an operator. In such a situation, for example, particularly in terms of the operation of turning the base machine, it may be difficult to adjust the orientation of the base machine as intended by the operator, depending on the level of the skill of the operator.

An object of the present disclosure is to provide a work machine control method, work machine control program, and work machine that facilitates improving especially operability in turning a base machine.

### [Means for Solving the Problem]

A work machine control method according to one aspect of the present disclosure is a method for controlling a work machine that includes a traveling unit that has a pair of crawlers aligned in a left-and-right direction. The control method includes: acquiring an operation signal from an operating device; and applying at least one of a first mode and a second mode, and controlling the traveling unit in accordance with the operation signal. The operating device includes a first operating unit configured to move a base machine of the work machine forward and backward, and a second operating unit configured to turn the base machine to the left and to the right. The first mode is a mode in which an operation on the second operating unit is disabled upon the first operating unit being unoperated. The second mode is a mode in which the base machine rotates in the same direction in plan view in response to the same operation on the second operating unit both upon moving forward and upon moving backward.

A work machine control program according to one aspect of the present disclosure is a work machine control program for causing one or more processors to execute the method for controlling the work machine.

A work machine according to one aspect of the present disclosure includes a base machine, a traveling unit, an acquisition processing unit, and a travel processing unit. The traveling unit includes a pair of crawlers aligned in a left-and-right direction. The acquisition processing unit acquires an operation signal from an operating device that includes a first operating unit configured to move the base machine forward and backward, and a second operating unit configured to turn the base machine to the left and to the right. The travel processing unit applies at least one of a first mode and a second mode, and controls the traveling unit in accordance with the operation signal. The first mode is a mode in which an operation on the second operating unit is disabled upon the first operating unit being unoperated. The second mode is a mode in which the base machine rotates in the same direction in plan view in response to the same operation on the second operating unit both upon moving forward and upon moving backward.

### ADVANTAGEOUS EFFECTS OF INVENTION

The present disclosure can provide a work machine control method, work machine control program, and work machine that facilitates improving especially operability in turning a base machine.

### BRIEF DESCRIPTION OF DRAWINGS

Fig. 1 is an external view of a sprayer according to a first embodiment as viewed from the left front;
Fig. 2 is an external view of the back surface of the sprayer according to the first embodiment as viewed from the back;
Fig. 3 is a diagram illustrating an example of crop rows for which the sprayer according to the first embodiment is used;
Fig. 4 is a schematic diagram illustrating the entire configuration of an automatic traveling system that uses the sprayer according to the first embodiment;
Fig. 5 is a schematic block diagram illustrating the main configuration of the sprayer according to the first embodiment;
Fig. 6 is an external view of the left side surface of the sprayer according to the first embodiment as viewed from the left;
Fig. 7 is an external view of the right side surface of the sprayer according to the first embodiment as viewed from the right;
Fig. 8 is an external view of the top surface of the sprayer according to the first embodiment as viewed from above;
Fig. 9 is an external view of the back surface of the sprayer according to the first embodiment as viewed from the back;
Fig. 10 is a schematic diagram illustrating a state of the sprayer according to the first embodiment as viewed obliquely from behind;
Fig. 11 is an enlarged view of a region Z 1 of Fig. 7, and illustrates an external view of an operating device in a balloon;
Fig. 12 is a schematic diagram for explaining a gradual turn operation of the sprayer according to the first embodiment during forward movement;
Fig. 13 is a schematic diagram for explaining the gradual turn operation of the sprayer according to the first embodiment during backward movement;
Fig. 14 is a schematic diagram for explaining a pivot turn operation of the sprayer according to the first embodiment;
Fig. 15 is a schematic diagram for explaining a spin turn operation of the sprayer according to the first embodiment;
Fig. 16 is a flowchart illustrating an example of a control method according to the first embodiment, particularly a process related to a manual travel mode;
Fig. 17 is an explanatory diagram illustrating an example of a correction curve that is used in a correction processing unit of the sprayer according to the first embodiment;
Fig. 18 is a flowchart illustrating an example of the control method according to the first embodiment, particularly a process related to control over a traveling unit in a case where a first mode is applied; and
Fig. 19 is a flowchart illustrating an example of a process related to control over the traveling unit in a case where a second mode is applied.

### DESCRIPTION OF EMBODIMENTS

An embodiment of the present disclosure is described hereinafter with reference to the accompanying drawings. The following embodiment is an example of the concretization of the present disclosure, and is not intended to limit the technical scope of the present disclosure.

### (First Embodiment)

### [1] Entire Configuration

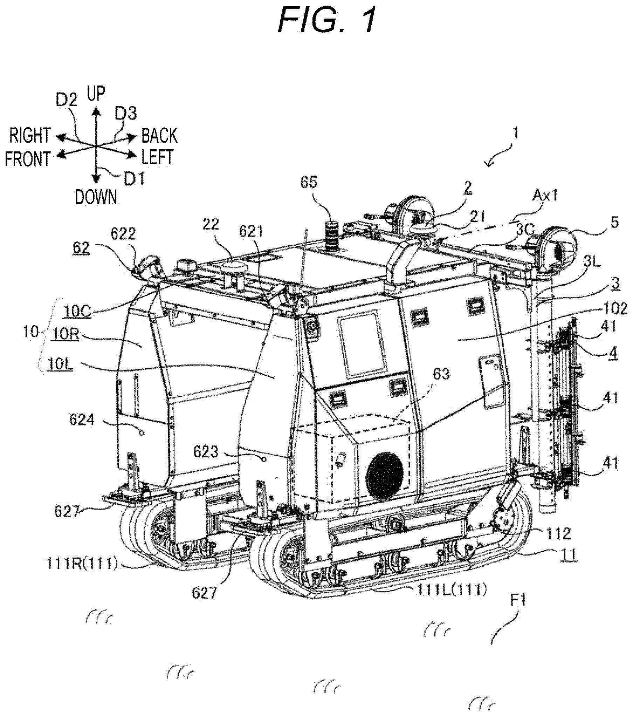

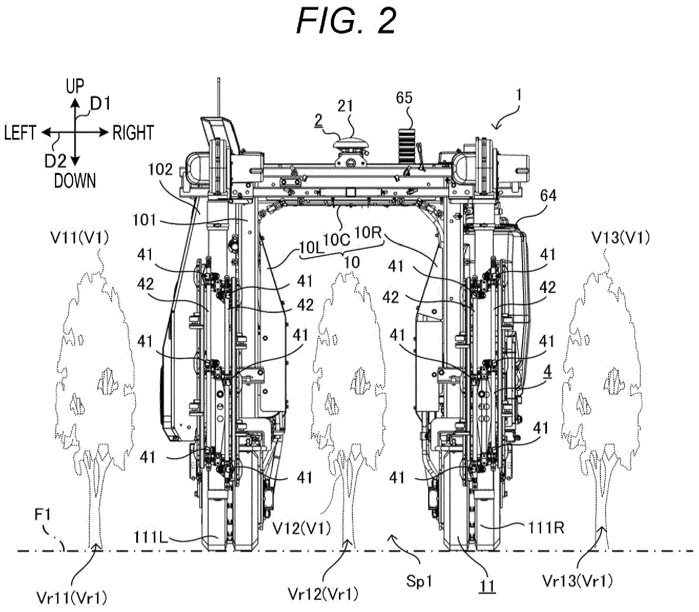

First, the entire configuration of a sprayer 1 according to the embodiment is described with reference to Figs. 1 to 4. In the embodiment, the sprayer 1 performs spray work of spraying a spray substance such as a chemical solution, water, or a fertilizer onto a crop V1 (refer to Fig. 2) grown on agricultural land F1. The sprayer 1 is an example of a "work machine" that performs various kinds of work in a work target area such as the agricultural land F1.

In other words, the sprayer 1 is a work machine capable of executing, as work, spray work of spraying a spray substance such as a chemical solution, water, or a fertilizer. Examples of the "work machine" referred to in the present disclosure includes work vehicles such as a tractor, a rice transplanter, an atomizer, a seeder, a transplanter, and a combine, in addition to a sprayer. In other words, the work machine includes work vehicles. Furthermore, the "work machine" referred to in the present disclosure is not limited to an agricultural machine (farm machine) and may be, for example, a construction machine (heavy equipment).

Moreover, the "agricultural land" referred to in the present disclosure is an example of the work target area where the sprayer 1, which is the work machine, performs various kinds of work such as the spray work while moving, and includes an orchard, pasture, rice field, and field where agricultural products are grown. In this case, the crop V1 grown on the agricultural land F1 is an agricultural product. Furthermore, when trees are grown in a tree farm, the tree farm is the agricultural land F1, and when trees to be used for wood or timber are grown in a forest as in forestry, the forest is the agricultural land F1. In this case, the crop V1 grown on the agricultural land F1 is, for example, plants or trees. However, the work target area where the work machine performs work is not limited to the agricultural land F1, and may be other than the agricultural land F1. If the work machine is, for example, a construction machine, a site where the construction machine performs work is the work target area.

In the embodiment, as an example, the sprayer 1 is assumed to be a vehicle that sprays a chemical solution onto the crop V1 grown on the agricultural land F1 while moving on the agricultural land F1 which is an orchard such as a vineyard or an apple orchard. In this case, the chemical solution is an example of the spray substance. Moreover, the crop V1 is an example of the spray target that is sprayed with the spray substance (chemical solution), and is, for example, a grapevine fruit. The crop V1, which is the spray target, is also an example of the work target targeted for work by the sprayer 1 as the work machine. The "chemical solution" as the spray substance referred to herein is an agricultural chemical that is used for, for example, an improvement in the efficiency of agriculture or the preservation of crops, and includes a herbicide, a bactericide, a fungicide, an insecticide, a herbicide, a rodenticide, and a growth promoter and a germination inhibitor for the crop V1.

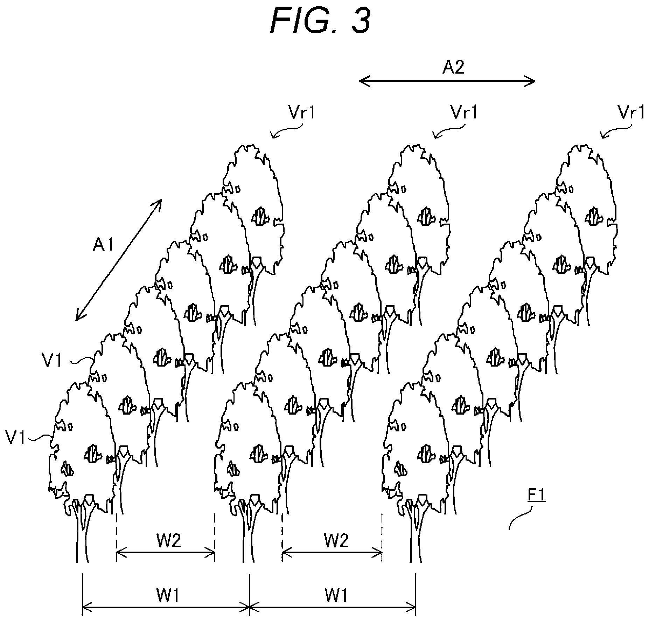

The crop V1 is placed in a plurality of rows at predetermined intervals on the agricultural land F1. Specifically, as illustrated in Fig. 3, a plurality of plants of the crop V1 is planted, arranged in straight lines in a vertical direction A1 in plan view. The plurality of plants of the crop V1 arranged in straight lines in the vertical direction A1 forms crop rows Vr1. Fig. 3 illustrates by example three crop rows Vr1 each including six plants of the crop V1 arranged in the vertical direction A1. The crop rows Vr1 are placed with a predetermined pitch W1 in a width direction A2. Consequently, work pathways that have a width W2 (< W1) equal to the intervals between the adjacent crop rows Vr1 and extend along the vertical direction A1 are formed between the crop rows Vr1. The sprayer 1 sprays the spray substance (chemical solution) onto the crop V1 while moving (traveling) in the vertical direction A1 along the work pathways.

As is described in detail below, the sprayer 1 that travels on the agricultural land F1 includes a base machine 10 having a portal frame shape. In other words, the base machine 10 includes a first block 10L and a second block 10R, which are aligned in a left-and-right direction D2, and a coupling unit 10C that couples the upper ends of the first block 10L and the second block 10R. Consequently, the base machine 10 has a portal frame shape formed by the first block 10L, the second block 10R, and the coupling unit 10C surrounding three sides, that is, the left side, the right side, and the upper side, of a space Sp1. In other words, the space Sp1 that opens in a front-and-back direction D3 is formed inside the base machine 10.

The sprayer 1 further includes a traveling unit 11 having a pair of crawlers 111L and 111R aligned in the left-and-right direction D2. The pair of crawlers 111L and 111R is provided below the first block 10L and the second block 10R, respectively, and is located on both sides of the space Sp1 in the left-and-right direction D2.

As illustrated in Fig. 2, the sprayer 1 can spray the spray substance (chemical solution) onto the plants of the crop V1 in one crop row Vr1 and the plants of the crop V1 in the crop rows Vr1 adjacent to the one crop row Vr1 while traveling in an attitude where the portal frame-shaped base machine 10 stands astride the one crop row Vr1. To put it differently, the sprayer 1 can travel in such a manner that the plants of the crop V1, which are the spray targets (work targets), pass through the space Sp1 inside the portal frame-shaped base machine 10. In other words, if there are three crop rows Vr11, Vr12, and Vr13 aligned in the left-and-right direction D2 as illustrated by example in Fig. 2, the sprayer 1 can travel while the base machine 10 stands astride any crop row Vr1 of the three crop rows Vr11, Vr12, and Vr13.

Here, if the base machine 10 stands astride the central crop row Vr12, the first block 10L travels in the work pathway between the left crop row Vr11 and the crop row Vr12, and the second block 10R travels in the work pathway between the right crop row Vr13 and the crop row Vr12. The sprayer 1 can simultaneously spray the spray substance (chemical solution) onto crop plants V11 in the crop row Vr11, crop plants V12 in the crop row Vr12, and crop plants V13 in the crop row Vr13. In this manner, the sprayer 1 according to the embodiment can simultaneously spray the spray substance (chemical solution) onto the spray targets (the plants of the crop V1) in the three rows while traveling. Therefore, the efficiency of the spray work is higher than that of a configuration in which the spray targets are sprayed on a row-by-row basis.

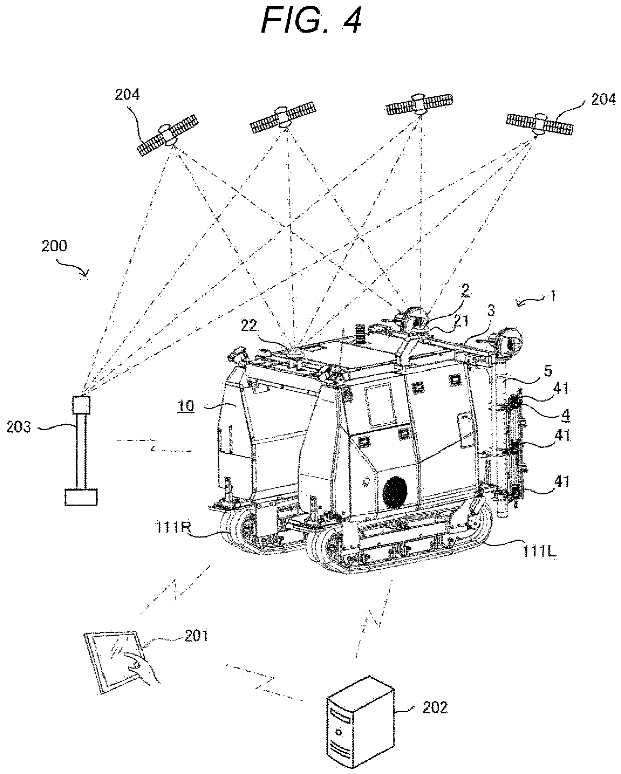

Furthermore, in the embodiment, as an example, the sprayer 1 is an unmanned vehicle that operates by automatic operation without control (including remote control) of a person (operator). Hence, as illustrated in Fig. 4, the sprayer 1 constitutes an automatic traveling system 200 together with, for example, an operating terminal 201, a server 202, a base station 203, and satellites 204. To put it differently, the automatic traveling system 200 includes the sprayer 1, the operating terminal 201, the server 202, the base station 203, and the satellites 204. However, at least one of the operating terminal 201, the server 202, the base station 203, and the satellites 204 may not be included in the components of the automatic traveling system 200. For example, the automatic traveling system 200 may not include the satellites 204.

The sprayer 1, the operating terminal 201, and the server 202 are communicable with each other. The term "communicable" in the present disclosure means that information can be exchanged directly, or indirectly via a communication network (network), a repeater, or the like, in an appropriate communication method for wired or wireless communication (communication using radio waves or light as a medium). For example, the sprayer 1 and the operating terminal 201 are communicable with each other via the Internet, a Local Area Network (LAN), a Wide Area Network (WAN), a public telephone network, a mobile phone network, a packet network, a wireless LAN, or the like. Moreover, each of the sprayer 1 and the operating terminal 201 is also communicable with the server 202 via the Internet or the like.

The satellites 204 are positioning satellites constituting a navigation satellite system such as a Global Navigation Satellite System (GNSS), and transmit GNSS signals (satellite signals). The base station 203 is a reference point (reference station) constituting the navigation satellite system. The base station 203 transmits, to the sprayer 1, correction information for calculating, for example, the current position of the sprayer 1.

The sprayer 1 according to the embodiment includes a positioning device 2 that detects, for example, the current position (latitude, longitude, altitude, and the like) and current direction of the base machine 10. The positioning device 2 executes a positioning process of determining (calculating), for example, the current position and current direction of the base machine 10 by means of the GNSS signals transmitted from the satellites 204. The positioning device 2 adopts a relatively highly accurate positioning method such as Real Time Kinematic (RTK) positioning that determines the position on the basis of positioning information (such as the GNSS signals) received by two receivers (the base station 203 and an antenna 21) and the correction information generated by the base station 203.

The operating terminal 201 is an information processing device such as a tablet terminal or a smartphone. The operating terminal 201 includes a display unit such as a liquid crystal display or an organic EL display that displays various kinds of information, and an operating unit such as a touchscreen, a mouse, or a keyboard that accepts an operation. The operator can operate the operating unit on an operation screen displayed on the display unit to perform an operation of registering various kinds of information. Moreover, the operator can operate the operating unit to instruct the sprayer 1, for example, to start the work and to stop traveling.

The server 202 is an information processing device such as a server device. The server 202 transmits, to the sprayer 1, information such as a target path along which the sprayer 1 travels automatically.

The sprayer 1 can travel automatically (autonomously) along a preset target path. For example, the sprayer 1 travels automatically along a target path including a plurality of work paths and a travel path from a work start position to a work end position. Each of the plurality of work paths is a straight path on which the sprayer 1 performs the work (spray work) on the crop V1 being the work target (spray target). The travel path is a path on which the sprayer 1 moves between the crop rows Vr1 without performing the spray work, and may include a turning path and a straight-ahead path.

Moreover, the sprayer 1 travels automatically in a predetermined order of rows. In the example of Fig. 2, the sprayer 1 travels astride the crop row Vr11, then travels astride the crop row Vr12, and then travels astride the crop row Vr13. In this manner, the sprayer 1 travels automatically according to the preset order of the crop rows Vr1. The sprayer 1 may travel on a row-by-row basis in the arrangement order of the crop rows Vr1, or may travel along every two or more rows.

Moreover, in the embodiment, for convenience of description, a vertical direction in a state where the sprayer 1 can be used is defined as an up-and-down direction D1 as illustrated in Fig. 1. Furthermore, the left-and-right direction D2 and the front-and-back direction D3 are defined relative to a direction as viewed from the center point of the sprayer 1 in plan view. In other words, the travel direction of the sprayer 1 during the forward movement of the sprayer 1 is forward in the front-and-back direction D3, and the travel direction of the sprayer 1 during the backward movement of the sprayer 1 is backward in the front-and-back direction D3. However, these directions are not intended to limit the directions of use (directions during use) of the sprayer 1.

Moreover, the term "parallel" referred to in the present disclosure means that two straight lines on one plane are in a relationship where an angle between the two straight lines falls within an error of approximately several degrees (for example, less than 10 degrees) relative to 0 degrees, in addition to a case where the two straight lines do not intersect with each other no matter how long the two straight lines are extended, that is, a case where the angle between the two straight lines is strictly 0 degrees (or 180 degrees). Similarly, the term "orthogonal" referred to in the present disclosure means that the two straight lines are in a relationship that the angle between the two straight lines falls within an error of approximately several degrees (for example, less than 10 degrees) relative to 90 degrees, in addition to a case where the two straight lines intersect strictly at 90 degrees.

### [2] Details of Sprayer

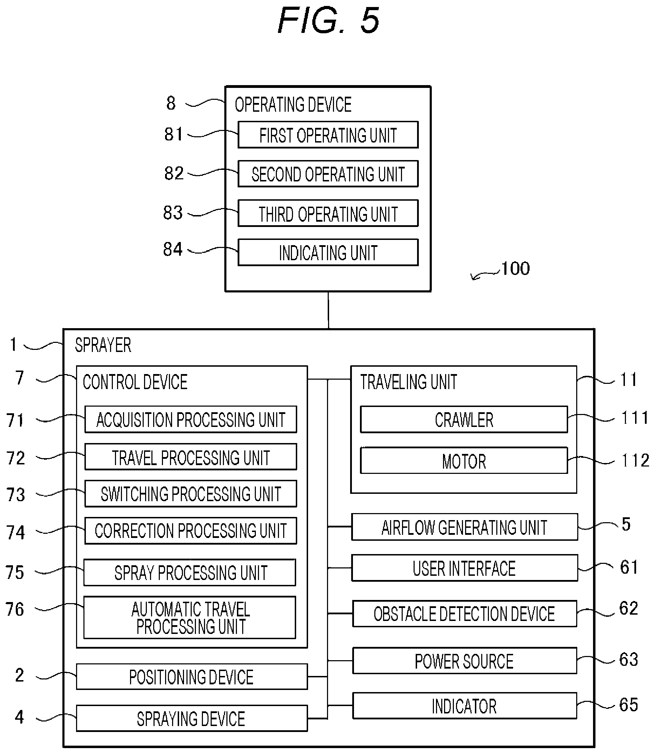

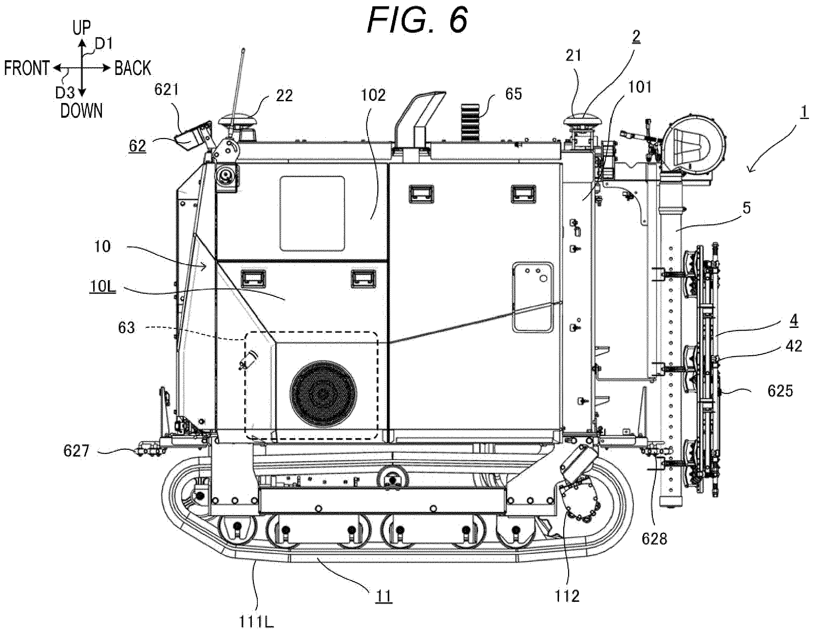

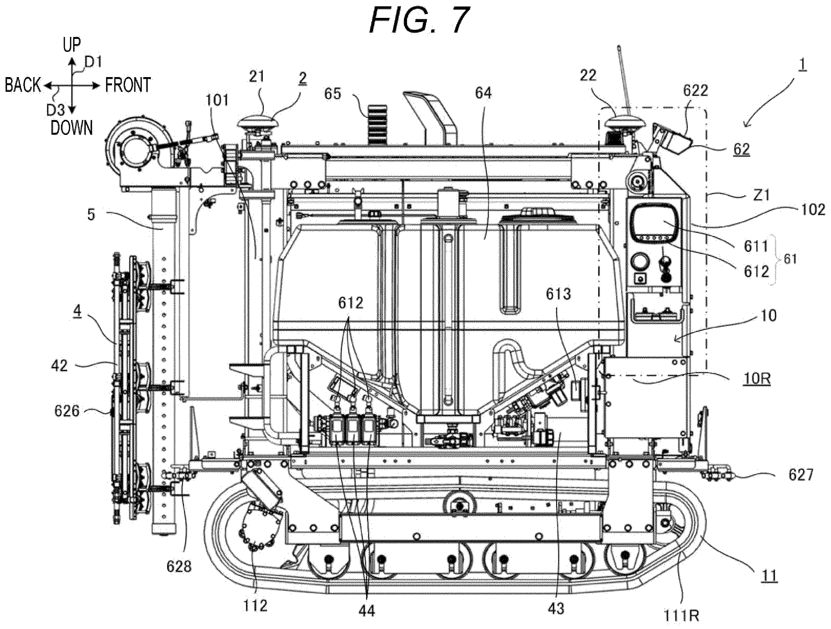

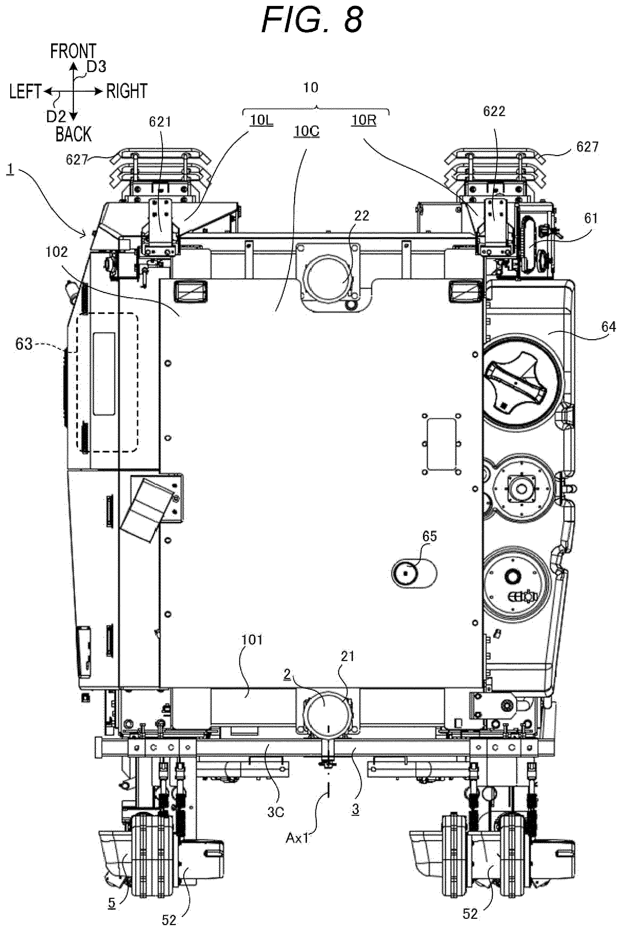

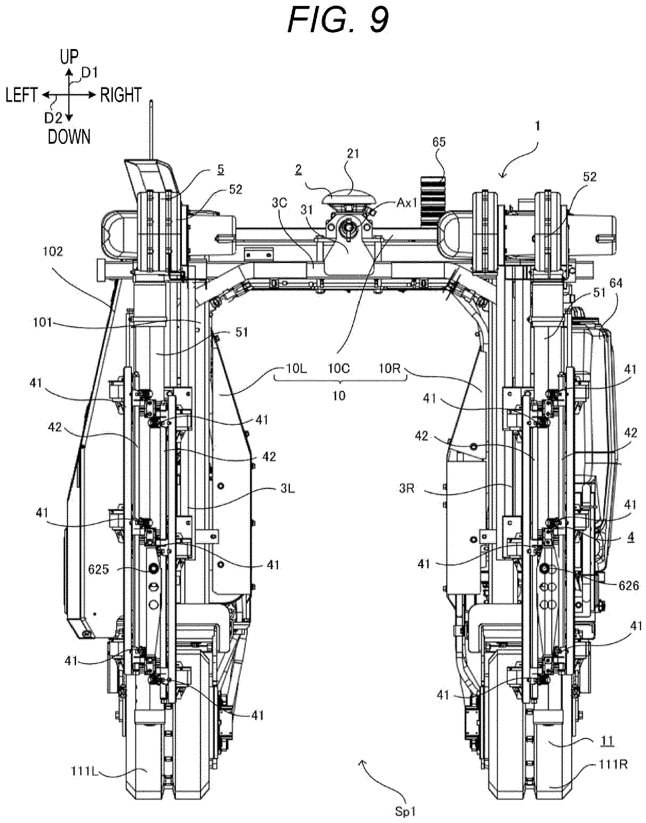

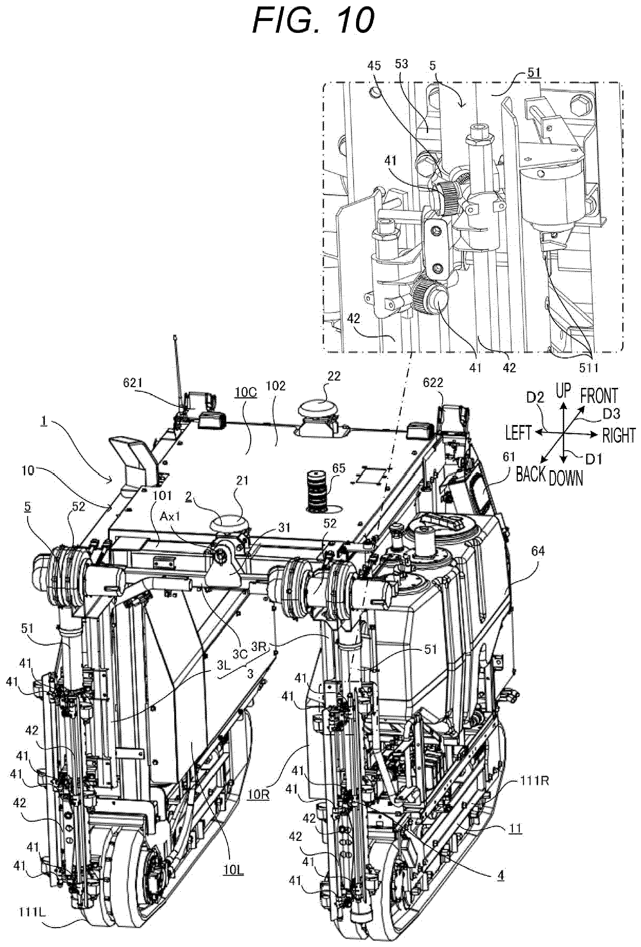

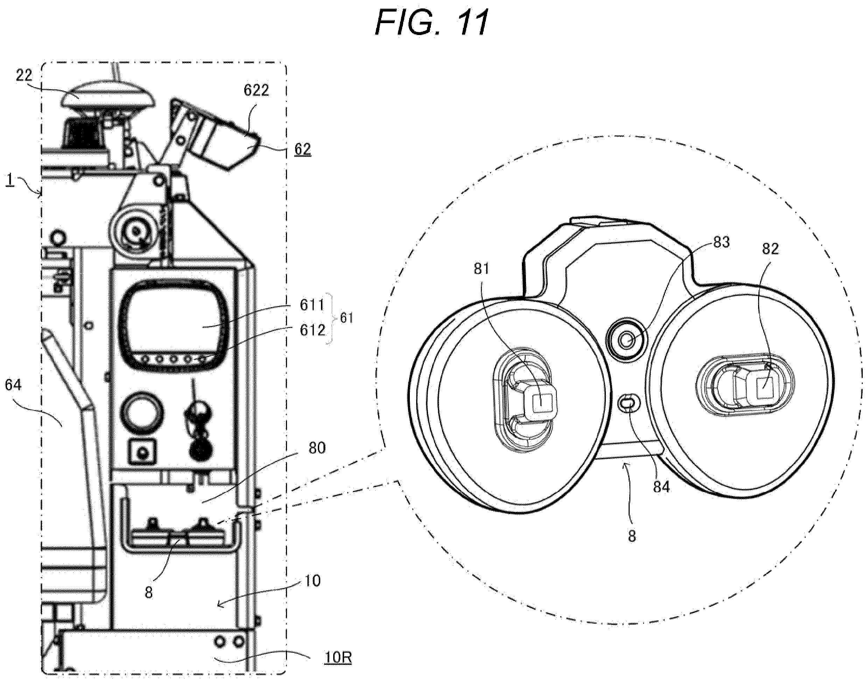

Next, the configuration of the sprayer 1 is described in more detail with reference to Figs. 1, 2, and 5 to 11. Fig. 1 is an external view of the sprayer 1 as viewed from the left front. Fig. 2 is an external view of the back surface of the sprayer 1 as viewed from the back (from behind). Fig. 5 is a schematic block diagram illustrating the main configuration of the sprayer 1. Fig. 6 is an external view of the left side surface of the sprayer 1 as viewed from the left. Fig. 7 is an external view of the right side surface of the sprayer 1 as viewed from the right. Fig. 8 is an external view of the top surface of the sprayer 1 as viewed from above. Fig. 9 is an external view of the back surface of the sprayer 1 as viewed from the back (from behind). Fig. 10 is a schematic diagram illustrating a state of the sprayer 1 as viewed obliquely from behind and illustrates a partially enlarged view in a balloon. Fig. 11 is an enlarged view of a region Z1 of Fig. 7, and illustrates an external view of an operating device 8 in a balloon.

The sprayer 1 includes the base machine 10, the traveling unit 11, a support frame 3, and a spraying device 4. In the embodiment, as illustrated in Fig. 5, the sprayer 1 further includes the positioning device 2, a control device 7, an airflow generating unit 5, a user interface 61, an obstacle detection device 62, a power source 63, a tank 64 (refer to Fig. 7), and an indicator 65. Moreover, the sprayer 1 further includes a communication terminal, a fuel tank, and a battery. In the embodiment, the structures of the sprayer 1, such as the base machine 10 and the support frame 3, are basically made of metal, and the material thereof is selected according to, for example, required strength and weather resistance. However, the material of the structures of the sprayer 1 is not limited to metal, and for example, resin or wood may be used as appropriate.

The base machine 10 is the main body of the sprayer 1, and supports most of the components of the sprayer 1, such as the positioning device 2 and the support frame 3. The base machine 10 includes a frame 101 (refer to Fig. 2) and a cover 102. The frame 101 is a member forming a framework of the base machine 10, and supports heavy objects such as the power source 63 and the tank 64. The cover 102 is a member forming an outer shell of the base machine 10, and is attached to the frame 101 in such a manner as to cover at least a part of the frame 101 and members mounted on the frame 101. On a part of the rear surface (back surface) and right side surface of the base machine 10, the frame 101 is not covered with the cover 102, and is exposed. The cover 102 is divided into a plurality of parts, and the plurality of parts is structured in such a manner as to be individually removable from the frame 101. Hence, for example, only parts of the cover 102, the parts corresponding to some devices (members) such as the power source 63, can be removed. Consequently, the some devices (members) such as the power source 63 can be exposed.

As described above, the base machine 10 includes the first block 10L and the second block 10R, which are aligned in the left-and-right direction D2. The first block 10L and the second block 10R face each other, spaced a distance of a certain value or more apart in the left-and-right direction D2. In the embodiment, as an example, the first block 10L is located on the left side, and the second block 10R is located on the right side. Hence, the left part of the base machine 10 serves as the first block 10L, and the right part of the base machine 10 serves as the second block 10R.
Furthermore, the base machine 10 includes the coupling unit 10C that couples the first block 10L and the second block 10R. In front view (as viewed from the front), the coupling unit 10C is long in the left-and-right direction D2, and each of the first block 10L and the second block 10R is long in the up-and-down direction D1.

Here, the coupling unit 10C couples the upper ends of the first block 10L and the second block 10R to each other. To put it differently, the first block 10L and the second block 10R each protrude downward from two ends (in the left-and-right direction D2) of the coupling unit 10C. Consequently, the base machine 10 has a portal frame shape formed by the first block 10L, the second block 10R, and the coupling unit 10C, the portal frame shape opening downward in addition to opening to each side in the front-and-back direction D3. The space Sp1 that is surrounded on the three sides by the first block 10L, the second block 10R, and the coupling unit 10C and opens in the front-and-back direction D3 is formed inside the base machine 10.

In short, as illustrated in Fig. 2, the base machine 10 forms, between the first block 10L and the second block 10R, the space Sp 1 through which the plants of the crop V1 (the work target) targeted for the work (spray work) by the spraying device 4 (the work unit) pass. Specifically, the dimensions of each unit of the base machine 10 are set in such a manner as to form the space Sp1 having a height and width that are equal to or greater than a standard size of the crop V1 being the spray target. Hence, as long as the plants of the crop V1 are of the standard size, the base machine 10 can allow the plants of the crop V1 to pass through the space Sp 1 while standing astride the plants of the crop V1 with clearance of a predetermined value or greater to prevent the plants of the crop V1 from coming into contact with the base machine 10. While the plants of the crop V1 are passing through the space Sp1, the first block 10L is located to the left of the plants of the crop V1, the second block 10R is located to the right of the plants of the crop V1, and the coupling unit 10C is located above the plants of the crop V1.

More specifically, in the embodiment, the base machine 10 is structured substantially symmetrically in the left-and-right direction D2. The first block 10L and the second block 10R are formed into a rectangular shape having approximately the same size and shape in side view. The first block 10L and the second block 10R each have a shape that is flat in the left-and-right direction D2, the smallest dimension of which is in the left-and-right direction D2 among the up-and-down direction D1, the left-and-right direction D2, and the front-and-back direction D3. Moreover, in each of the first block 10L and the second block 10R, a part above the central part in the up-and-down direction D1 is formed into a tapered shape that reduces in the dimension in the left-and-right direction D2 toward the upper end. The coupling unit 10C is formed into a rectangular shape having a larger dimension in the front-and-back direction D3 than in the left-and-right direction D2 in plan view. The coupling unit 10C has a shape that is flat in the up-and-down direction D1, the smallest dimension of which is in the up-and-down direction D1 among the up-and-down direction D1, the left-and-right direction D2, and the front-and-back direction D3.

In this manner, the base machine 10 can be roughly divided into three parts (blocks): the first block 10L, the second block 10R, and the coupling unit 10C. Each of the first block 10L, the second block 10R, and the coupling unit 10C includes the frame 101 and the cover 102. To put it differently, each of the first block 10L and the second block 10R includes the frame 101 and the cover 102. Furthermore, most of the components of the sprayer 1 such as the positioning device 2 and the support frame 3 are dispersedly provided to the first block 10L, the second block 10R, and the coupling unit 10C.

The traveling unit 11 is a traveling device (vehicle body) that causes the sprayer 1 to travel, and is provided below the base machine 10. The traveling unit 11 causes the base machine 10 to perform travel (including a turn) on the ground. Therefore, the base machine 10 can move on the agricultural land F1 in the left-and-right direction D2 and in the front-and-back direction D3. Such a traveling unit 11 is provided to the base machine 10. Therefore, the sprayer 1 can perform the work (spray work) while moving on the agricultural land F1.

The traveling unit 11 includes the pair of crawlers (tracks) 111L and 111R aligned in the left-and-right direction D2. The pair of crawlers 111L and 111R is spaced a fixed distance apart in the left-right direction D2. The space Sp1 for allowing the plants of the crop V1 being the spray targets to pass through is formed between the pair of crawlers 111L and 111R. In other words, the left crawler 111L located to the left of the space Sp1 and the right crawler 111R located to the right of the space Sp1 face each other across the space Sp1. When the left crawler 111L and the right crawler 111R are not particularly distinguished, the crawlers 111L and 111R are also simply referred to as the "crawlers 111." Moreover, the traveling unit 11 includes motors 112 that drive the crawlers 111. In other words, the traveling unit 11 is a crawler (tracked) traveling device that causes the motors 112 to drive the endless belt-shaped crawlers 111, thereby causing the sprayer 1 to travel.

Here, at least two motors 112 are provided for the pair of crawlers 111L and 111R. The left motor 112 that drives the left crawler 111L and the right motor 112 that drives the right crawler 111R can drive the crawlers 111 individually. In the embodiment, as an example, the motors 112 are hydraulic motors (hydraulic actuators). Hydraulic fluid is supplied from a hydraulic pump to the motors 112 to drive the crawlers 111. According to this configuration, even if the road condition of the agricultural land F1 is bad, the base machine 10 can travel relatively stably.

Here, the crawlers 111 and the motors 112 are provided below the first block 10L and the second block 10R. In other words, the first block 10L includes the left crawler 111L and the motor 112 that drives the crawler 111L, and the second block 10R includes the right crawler 111R and the motor 112 that drives the crawler 111R. In the embodiment, the pair of crawlers 111L and 111R and the pair of motors 112 are structured substantially symmetrically in the left-and-right direction D2. In this manner, the pair of crawlers 111L and 111R is spaced a distance equal to the space Sp1 apart in the left-and-right direction D2. Therefore, the sprayer 1 can travel in a relatively stable attitude in various road conditions of the agricultural land F1 including a horizontally inclined surface that is lower in one side in the left-and-right direction D2.

Here, the pair of crawlers 111L and 111R is driven by power from the power source 63 in a state where the speed can be varied independently by a hydrostatic continuously variable transmission. Hence, the base machine 10 enters a forward moving state of moving straight in a forward direction by driving the pair of crawlers 111L and 111R at equal speeds in the forward direction, and enters a backward moving state of moving straight in a backward direction by driving the pair of crawlers 111L and 111R at equal speeds in the backward direction. Moreover, the base machine 10 enters a forward turning state of turning while moving forward by driving the pair of crawlers 111L and 111R at unequal speeds in the forward direction, and enters a backward turning state of turning while moving backward by driving the pair of crawlers 111L and 111R at unequal speeds in the backward direction. Moreover, the base machine 10 enters a pivot turning (pivot turning) state by driving one of the pair of crawlers 111L and 111R while stopping the drive of the other crawler 111, and enters a spin turning (spin turning) state by driving the pair of crawlers 111L and 111R at equal speeds in the forward direction and in the backward direction. Moreover, the base machine 10 enters a travel stop state by stopping the drive of the pair of crawlers 111L and 111R. The turn operation of the base machine 10 by the traveling unit 11 is described in detail in the section "[3] Details of Turn Operation."

Moreover, for example, the power source 63 is mounted in the first block 10L, and, for example, the tank 64 is mounted in the second block 10R. In this manner, the components of the sprayer 1 are distributed and placed in the first block 10L and the second block 10R of the base machine 10; therefore, the equilibration in the left-and-right direction D2 and the lowering of the center of gravity are promoted for the sprayer 1. As a result, the sprayer 1 can travel stably on, for example, an inclined surface on the agricultural land F 1.

As described above, the positioning device 2 is a device that detects, for example, the current position and current direction of the base machine 10. The positioning device 2 includes at least the antenna 21. The antenna 21 receives, for example, the GNSS signals transmitted from the satellites 204. In other words, the antenna 21 includes a position determination antenna for determining the position of the base machine 10. Here, the antenna 21 is placed on the top surface (upper surface) of the base machine 10 in such a manner as to facilitate the reception of the signals (GNSS signals) from the satellites 204. To put it differently, the antenna 21 is placed in a position higher than the highest position of the base machine 10. Furthermore, the positioning device 2 includes an attitude detection unit that detects the attitude of the base machine 10.

In the embodiment, the positioning device 2 further includes an antenna 22 that is a second antenna, in addition to the antenna 21 that is a first antenna. The positioning device 2 receives, for example, the GNSS signals through each of the two antennas 21 and 22. Here, the antenna 22 (the second antenna) is aligned with the antenna 21 (the first antenna) in the front-and-back direction D3. Consequently, the positioning device 2 can transmit and receive the signals (such as the GNSS signals) through the each of the antennas 21 and 22. In particular, if the antennas 21 and 22 are position determination antennas, the current positions of the front and back parts of the base machine 10 can be determined; therefore, it is also possible to determine the orientation (current direction) of the base machine 10 in addition to the current positions.

The support frame 3 is a member that is attached to one end of the base machine 10 in the front-and-back direction D3 and supports spray nozzles 41 of the spraying device 4 described below. In the embodiment, the support frame 3 is attached to the back end of the base machine 10. As in the base machine 10, the support frame 3 has a portal frame shape, and is placed in a position overlapping the base machine 10 in back view (as viewed from behind). In other words, the support frame 3 includes a vertical frame 3L (a first vertical frame) and a vertical frame 3R (a second vertical frame), which are aligned in the left-and-right direction D2, and a horizontal frame 3C coupling the upper ends of the vertical frame 3L and the vertical frame 3R. Consequently, the vertical frame 3L, the vertical frame 3R, and the horizontal frame 3C of the support frame 3 form a portal frame shape that surrounds the three sides, that is, the left side, the right side, and the upper side, of the space Sp 1.

Specifically, the support frame 3 includes the vertical frame 3L and the vertical frame 3R, which are aligned in the left-and-right direction D2. The vertical frame 3L and the vertical frame 3R face each other, spaced a distance of a certain value or more apart in the left-and-right direction D2. In the embodiment, as an example, the vertical frame 3L is located on the left side, and the vertical frame 3R is located on the right side. Hence, the vertical frame 3L is located behind the first block 10L of the base machine 10, and the vertical frame 3R is located behind the second block 10R of the base machine 10. In back view (as viewed from behind), the horizontal frame 3C is long in the left-and-right direction D2, and the vertical frame 3L and the vertical frame 3R are long in the up-and-down direction D1.

Here, the horizontal frame 3C couples the upper ends of the vertical frame 3L and the vertical frame 3R. To put it differently, the vertical frame 3L and the vertical frame 3R protrude downward from two ends (in the left-and-right direction D2) of the horizontal frame 3C, respectively. In this manner, the support frame 3 includes the horizontal frame 3C that is long in the left-and-right direction D2 and the pair of vertical frames 3L and 3R that are long in the up-and-down direction D1 and protrude downward from the two ends of the horizontal frame 3C, respectively. Consequently, the support frame 3 has a portal frame shape formed by the vertical frame 3L, the vertical frame 3R, and the horizontal frame 3C, the portal frame shape opening downward in addition to opening to each side in the front-and-back direction D3. The space Sp1 that is surrounded on the three sides by the vertical frame 3L, the vertical frame 3R, and the horizontal frame 3C and opens in the front-and-back direction D3 is formed inside the support frame 3.

In short, as illustrated in Fig. 2, the support frame 3 forms, between the pair of vertical frames 3L and 3R, the space Sp1 through which the plants of the crop V1 (the work targets and the spray targets) targeted for the work (spray work) by the spraying device 4 (the work unit) pass. Specifically, the dimensions of each unit of the support frame 3 are set in such a manner as to form the space Sp1 having a height and width that are equal to or greater than the standard size of the crop V1 being the spray target. Hence, as long as the plants of the crop V1 are of the standard size, the support frame 3 can allow the plants of the crop V1 to pass through the space Sp1 while standing astride the plants of the crop V1 with clearance of a predetermined value or greater to prevent the plants of the crop V1 from coming into contact with the support frame 3. While the plants of the crop V1 are passing through the space Sp 1, the vertical frame 3L is located to the left of the plants of the crop V1, the vertical frame 3R is located to the right of the plants of the crop V1, and the horizontal frame 3C is located above the plants of the crop V1.

More specifically, in the embodiment, the support frame 3 is structured substantially symmetrically in the left-and-right direction D2. The vertical frame 3L and the vertical frame 3R have a cylindrical shape that is circular in cross section. In the embodiment, as an example, each of the vertical frame 3L and the vertical frame 3R includes two cylindrical members arranged side by side. The horizontal frame 3C has a rectangular tubular shape that is rectangular in cross section. Here, the vertical frame 3L and the vertical frame 3R are firmly fixed to the horizontal frame 3C by appropriate fixing means such as coupling fittings, brace fittings, or welding. Hence, the each of the vertical frame 3L and the vertical frame 3R maintains a state of being orthogonal to the horizontal frame 3C. To put it differently, in back view, each of a corner between the vertical frame 3L and the horizontal frame 3C and a corner between the vertical frame 3R and the horizontal frame 3C has a right angle.

Moreover, in the embodiment, the support frame 3 is supported by the base machine 10 in such a manner as to be rotatable about a rotation axis Ax1 while maintaining a relative positional relationship between the pair of vertical frames 3L and 3R and the horizontal frame 3C. The rotation axis Ax1 is an axis passing through a support portion 31 provided to the horizontal frame 3C and extending along the front-and-back direction D3. In other words, the support frame 3 that supports the work unit (the spray nozzles 41) is supported by the base machine 10 in such a manner as to be rotatable about the rotation axis Ax1 extending along the front-and-back direction D3. Here, the term "rotation axis" referred to in the present disclosure means a virtual axis (straight line) that is the center of the rotational motion of a solid of revolution. In other words, the rotation axis Ax1 is a virtual axis without material substance. However, the rotation axis Ax1 may be a member with material substance such as a hinge pin.

The spraying device 4 includes the spray nozzles 41. The spraying device 4 executes the spray work of spraying the chemical solution as the spray substance stored in the tank 64 onto the plants of the crop V1 as the spray targets. The spray nozzles 41 are portions that are supported by the support frame 3 and spray the spray substance. In the embodiment, as an example, each of the spray nozzles 41 is a discharge port (a spray portion) that actually serves as an outlet for the spray substance (chemical solution). The spraying device 4 includes a plurality of (for example, 12 in the embodiment) the spray nozzles 41.

The spraying device 4 includes spray pipes 42, a pump 43 (refer to Fig. 7), and valves 44 (refer to Fig. 7), and spray piping, in addition to the spray nozzles 41. The spray nozzles 41 are an example of the work unit that executes the work (spray work), and are supported by the support frame 3. The support frame 3 is supported by the base machine 10, which means that the spray nozzles 41 (the work unit) are indirectly supported by the base machine 10. In the embodiment, the spray nozzles 41 are attached to the spray pipes 42. The spray pipes 42 are connected by the spray piping to the pump 43 via the valves 44. The pump 43 pumps, to the spray pipes 42, the spray substance (chemical solution) stored in the tank 64. The valves 44 are electronically controlled valve units such as magnetic valves, and change, for example, a pressure (spray pressure) and a spray pattern for spraying the spray substance. Consequently, the chemical solution in the tank 64 is supplied by the pump 43 to the spray nozzles 41 through the valves 44 and the spray pipes 42, and is sprayed through the spray nozzles 41. Here, the atomized chemical solution is discharged (sprayed) through the spray nozzles 41.

More specifically, as illustrated in Figs. 9 and 10, the spray pipes 42 are piping that is long in the up-and-down direction D1, and two spray pipes 42 are attached to the each of the vertical frame 3L and the vertical frame 3R of the support frame 3. In other words, in the embodiment, the spraying device 4 includes four spray pipes 42 in total. The two (the pair of) spray pipes 42 attached to the each of the vertical frame 3L and the vertical frame 3R are aligned in the left-and-right direction D2. Each of the spray pipes 42 allows the chemical solution as the spray substance injected from an upper end thereof, down the pipe and discharges the chemical solution from three spray nozzles 41. Three spray nozzles 41 are attached to the each of the spray pipes 42. Consequently, the spraying device 4 include 12 spray nozzles 41 in total.

The each of the spray nozzles 41 is attached to its corresponding spray pipe 42 in such a manner that the position can be changed in the up-and-down direction D1. Consequently, the each of the spray nozzles 41 can change spacing between the adjacent spray nozzles 41 and a height position relative to the corresponding spray pipe 42 according to the spray target (the crop V1). Moreover, the each of the spray nozzles 41 is attached in such a manner that the position and orientation (angle) thereof in the up-and-down direction D1 and the left-and-right direction D2 relative to the base machine 10 can be changed according to the spray target. However, in the spraying device 4, for example, the number of the spray nozzles 41 provided to the each of the spray pipes 42 can be changed as appropriate according to, for example, the kind of the spray target (the crop V1), or the length of the each of the spray pipes 42.

The airflow generating unit 5 generates an airflow that conveys the spray substance (chemical solution) discharged through the spray nozzles 41. The airflow generating unit 5, together with the spray nozzles 41, is supported by the support frame 3 . In other words, the sprayer 1 according to the embodiment is an air-assisted sprayer that sprays the spray substance (chemical solution) by means of the airflow generated by the airflow generating unit 5. Consequently, the sprayer 1 can efficiently spray the spray substance (chemical solution) also onto the spray targets (the plants of the crop V1) that are positioned relatively far from the spray nozzles 41.

The airflow generating unit 5 includes ducts 51 and a blower 52. Each of the ducts 51 forms a flow path through which air is passed in the up-and-down direction D1. The blower 52 passes air into the ducts 51. The airflow generating unit 5 forms an airflow by means of the air blown out from each of blow-out holes 511 (refer to Fig. 10) formed in the ducts 51. In short, the airflow generating unit 5 blows the air that is sent to the ducts 51 by the blower 52, along the flow paths in the ducts 51, and then out through the blow-out holes 511, thereby generating currents of air (airflows) flowing outward through the blow-out holes 511. According to this configuration, stable airflows can be generated over a relatively wide area. Furthermore, the air flow generating unit 5 can adjust the volume of air under control of the blower 52. The airflow generating unit 5 can adjust the conveyance distance of the spray substance by adjusting the volume of air, and can convey the spray substance farther as the volume of air increases. Therefore, the sprayer 1 according to the embodiment can adjust the area over which the spraying device 4 spreads the spray substance.

More specifically, the ducts 51 are piping that is long in the up-and-down direction D1, and one duct 51 is attached to the each of the vertical frame 3L and the vertical frame 3R of the support frame 3. In other words, in the embodiment, the airflow generating unit 5 includes two ducts 51 in total. The each of the ducts 51 includes a left side surface and a right side surface, in each of which a plurality of the blow-out holes 511 is formed in a line along the up-and-down direction D1. Furthermore, two spray pipes 42 of the spraying device 4 are fixed behind the each of the ducts 51.

Here, the each of the ducts 51, the two spray pipes 42 attached to the each of the ducts 51, and the total of six spray nozzles 41 attached to the two spray pipes 42 of the each of the ducts 51 are placed symmetrically in the left-and-right direction D2. Of the two spray pipes 42 of the each of the ducts 51, three spray nozzles 41 provided to the left spray pipe 42 discharge the spray substance (chemical solution) toward the left front, and three spray nozzles 41 provided to the right spray pipe 42 discharge the spray substance (chemical solution) toward the right front. Hence, the atomized spray substance discharged from the left spray nozzles 41 is conveyed leftward, borne in the airflow blown leftward from the each of the ducts 51, and the atomized spray substance discharged from the right spray nozzles 41 is conveyed rightward, borne in the airflow blown rightward from the each of the ducts 51.

Hence, of the plurality of (12) spray nozzles 41, three spray nozzles 41 provided to the leftmost spray pipe 42 spray the chemical solution leftward onto the plants of the crop V1 located outward of and to the left of the base machine 10. Of the plurality of spray nozzles 41, three spray nozzles 41 provided to the inner left spray pipe 42 adjacent to the leftmost spray pipe 42 spray the chemical solution rightward onto the plants of the crop V1 located in the space Sp1 inside the base machine 10. Of the plurality of spray nozzles 41, three spray nozzles 41 provided to the rightmost spray pipe 42 spray the chemical solution rightward onto the plants of the crop V1 located outward of and to the right of the base machine 10. Of the plurality of spray nozzles 41, three spray nozzles 41 provided to the inner right spray pipe 42 adjacent to the rightmost spray pipe 42 spray the chemical solution leftward onto the plants of the crop V1 located in the space Sp1 inside the base machine 10.

With the above configuration, in the spraying device 4, the two spray pipes 42 and the six spray nozzles 41, which are provided to the vertical frame 3L of the support frame 3, function as a left spraying unit. Moreover, the two spray pipes 42 and the six spray nozzles 41, which are provided to the vertical frame 3R of the support frame 3, function as a right spraying unit. The pair of left and right spraying units is placed behind the base machine 10, spaced apart to allow the plants of the crop V1 to pass through a space (the space Sp1) therebetween in such a manner as to be able to spray in the left-and-right direction D2.

Moreover, the spraying device 4 is configured in such a manner that the plurality of (12) spray nozzles 41 is divided into a plurality of systems and can be controlled on a system-by-system basis. In the embodiment, as an example, six spray nozzles 41 provided to two spray pipes 42 that are on the inner side in the left-and-right direction D2, of the four spray pipes 42, are classified as a first system, the three spray nozzles 41 provided to the leftmost spray pipe 42 are classified as a second system, and the three spray nozzles 41 provided to the rightmost spray pipe 42 are classified as a third system. Hence, the spray patterns of the spraying device 4 include a full spray pattern in which the spray substance (chemical solution) is sprayed from all the spray nozzles 41, and a restricted spray pattern in which the spray direction is restricted. The restricted spray pattern includes a first spray pattern in which only the six spray nozzles 41 of the first system perform spraying, a second spray pattern in which only the three spray nozzles 41 of the second system perform spraying, and a third spray pattern in which only the three spray nozzles 41 of the third system perform spraying. Furthermore, the restricted spray pattern includes a fourth spray pattern in which only nine spray nozzles 41 of the first and second systems perform spraying, a fifth spray pattern in which only nine spray nozzles 41 of the first and third systems perform spraying, and a six spray pattern in which only six spray nozzles 41 of the second and third systems perform spraying.

The spraying device 4 is controlled by the control device 7, and the above-mentioned plurality of spray patterns (a total of seven patterns including the full spray pattern and the six restricted spray patterns) is switched as appropriate. At least the valves 44 of the spraying device 4 are provided according to the systems of the plurality of spray nozzles 41. In the embodiment, three valves 44 are provided for the three systems (the first system, the second system, and the third system), respectively. The plurality of (here, three) valves 44 is individually controlled by the control device 7 to change the spray pattern. Moreover, the spraying device 4 can change the spraying area of the spray substance also by changing the pressure (spray pressure) for spraying the spray substance on a system-by-system basis. Furthermore, in the embodiment, the spraying area of the spray substance can be adjusted also by adjusting the volume of air of the airflow generating unit 5. Therefore, more various spraying areas can be achieved according to the spray target (the crop V1) or the spray substance (chemical solution).

In the embodiment, as described above, the support frame 3 is not relatively fixed to the base machine 10, but is configured in such a manner as to be rotatable about the rotation axis Ax1. When the support frame 3 rotates, the plurality of spray nozzles 41 supported by the support frame 3 also rotates about the rotation axis Ax1.

Moreover, the sprayer 1 according to the embodiment does not include an actuator that actively rotates the support frame 3. Hence, the support frame 3 rotates only after an external force acts on the support frame 3. For example, when the base machine 10 travels on a horizontally inclined surface, the support frame 3 rotates under the weight the support frame 3, that is, gravity acting on the support frame 3. If the support frame 3 and the members (such as the spray nozzles 41, the spray pipes 42, and the airflow generating unit 5) supported by the support frame 3 have a weight balance symmetrical in the left-and-right direction D2, the support frame 3 is maintained in a neutral position as long as the base machine 10 stays horizontal.

According to the rotatable support frame 3 described above, for example, while the base machine 10 is traveling on a horizontally inclined surface, the support frame 3 rotates, which hardly causes the occurrence of unevenness in the amount of the spray substance (chemical solution) sprayed by the spray nozzles 41 (uneven spraying). In short, if the support frame 3 is fixedly supported by the base machine 10, the base machine 10 may tilt when traveling on a horizontally inclined surface. In this case, a distance from the spray nozzle 41 is different between the upper part and the lower part of the plant of the crop V1 (the spray target) extending straight in the vertical direction from the ground (the agricultural land F1), and the amount of the spray substance sprayed may be uneven. On the other hand, when the support frame 3 rotates, the sprayer 1 according to the embodiment can maintain, for example, the support frame 3 and the spray nozzles 41 supported by the support frame 3 in the same attitudes as when traveling on a horizontal plane. Hence, the distance from the spray nozzle 41 is less likely to vary between the upper part and the lower part of the plant of the crop V1 (the spray target) extending straight in the vertical direction from the ground (the agricultural land F1), which facilitates preventing the occurrence of unevenness in the amount of the spray substance sprayed.

The user interface 61 is a device that performs at least one of output of information to a user and acceptance of an operation. Here, as illustrated in Fig. 7, the user interface 61 includes a display unit 611 such as a liquid crystal display or an organic EL display that displays various kinds of information, and an operating unit 612 such as a touchscreen, a knob, or a push button switch that accepts an operation. An operator being an example of the user can operate the operating unit 612 in accordance with an operation screen displayed on the display unit 611 to perform various settings. Specifically, the operator operates the operating unit 612 of the user interface 61 and sets, for example, operating conditions of the spraying device 4. Examples of the operating conditions of the spraying device 4 include the pressure (spray pressure) and the flow rate for spraying the spray substance from the spray nozzles 41.

The obstacle detection device 62 includes a first sensor 621, a second sensor 622, a third sensor 623, and a fourth sensor 624. All of the first sensor 621 to the fourth sensor 624 are placed, facing forward of the base machine 10. The first sensor 621 is placed at the left front end of the top surface of the base machine 10. The second sensor 622 is placed at the right front end of the top surface of the base machine 10. The third sensor 623 is placed on the front surface of the first block 10L. The fourth sensor 624 is placed on the front surface of the second block 10R. Moreover, the obstacle detection device 62 further includes a fifth sensor 625 (refer to Fig. 6) and a sixth sensor 626 (refer to Fig. 7). Both of the fifth sensor 625 and the sixth sensor 626 are placed, facing backward of the base machine 10. The fifth sensor 625 is attached to the vertical frame 3L. The sixth sensor 626 is attached to the vertical frame 3R.

Each of the first sensor 621 to the sixth sensor 626 includes a sensor such as an image sensor (a camera), a sonar sensor, a radar, or Light Detection and Ranging (LiDAR), and detects the surrounding states of the base machine 10. In the embodiment, as an example, each of the first sensor 621 to the sixth sensor 626 is a three-dimensional sensor that measures a distance to each measurement point (measurement target) within a measurement range by the Time Of Flight (TOF) method that measures a distance to a measurement point on the basis of a round-trip time it takes for light or sound to travel to and back from the measurement point. Examples of the surrounding states of the base machine 10 include the presence or absence of an object (such as an obstacle) that is present ahead of the base machine 10 in the travel direction, and the location (distance and direction) of the object.

Moreover, the obstacle detection device 62 further includes front contact sensors 627 and back contact sensors 628. A pair of the left and right front contact sensors 627 is placed at the front of the base machine 10, and a pair of the left and right back contact sensors 628 is placed at the back of the base machine 10. Each of the front contact sensors 627 and the back contact sensors 628 detects an obstacle when coming into contact with the obstacle. Each of the sensors transmits a detection signal to the control device 7 when detecting an obstacle.

The power source 63 is a drive source that supplies power to at least the traveling unit 11. The power source 63 includes an engine such as a diesel engine. The power source 63 drives the hydraulic pump and supplies the hydraulic fluid from the hydraulic pump to, for example, the motors 112 of the traveling unit 11 to drive, for example, the traveling unit 11.

The tank 64 stores the spray substance such as a chemical solution. The spray substance stored in the tank 64 is supplied to the spraying device 4, and sprayed through the spray nozzles 41 of the spraying device 4. The tank 64 can be refilled with the chemical solution being the spray substance from the outside. The capacity of the tank 64 is, for example, approximately 200 L.

The indicator 65 is placed on the top surface of the base machine 10. As an example, the indicator 65 is formed into a columnar shape that is long in the up-and-down direction D1. The state of illumination of the indicator 65 changes according to the operating state (such as the traveling state and the execution state of the spray work) of the sprayer 1. Consequently, the operating state of the sprayer 1 can be visually recognized even from the surroundings of the sprayer 1.

The control device 7 mainly includes a computer system having one or more processors such as a Central Processing Unit (CPU) and one or more memories such as Read Only Memory (ROM) and Random Access Memory (RAM), and executes various processes (information processing). In the embodiment, the control device 7 is an integrated controller that controls the entire sprayer 1, and includes, for example, an electronic control unit (ECU: Electronic Control Unit). However, the control device 7 may be provided separately from the integrated controller, or may mainly include one processor, or a plurality of processors.

As illustrated in Fig. 5, the control device 7 includes an acquisition processing unit 71, a travel processing unit 72, a switching processing unit 73, a correction processing unit 74, a spray processing unit 75, and an automatic travel processing unit 76. In the embodiment, as an example, the control device 7 mainly includes the computer system having one or more processors; therefore, the plurality of functional units (such as the acquisition processing unit 71) is achieved by the one or more processors executing a control program. The plurality of functional units included in the control device 7 may be dispersedly provided in a plurality of housings, or may be provided in one housing.

The control device 7 is configured in such a manner as to be communicable with a device provided in each part of the base machine 10. In other words, at least the traveling unit 11, the positioning device 2, the spraying device 4, the airflow generating unit 5, the user interface 61, the obstacle detection device 62, the power source 63, the indicator 65, and the like are connected to the control device 7. Consequently, the control device 7 can control, for example, the traveling unit 11 and the spraying device 4, and acquire electric signals from, for example, the positioning device 2 and the obstacle detection device 62. The control device 7 may exchange various kinds of information (data) directly with each device, or indirectly via, for example, a repeater.

In addition to the above functional units, the control device 7 further includes an engine control unit, and a Hydro-Static Transmission (HST) control unit that performs control related to a hydrostatic continuously variable transmission. The engine control unit performs control related to the engine (the power source 63). The HST control unit performs control related to the hydrostatic continuously variable transmission.

The acquisition processing unit 71 executes an acquisition process of acquiring an electric signal (including data) from each device. In the embodiment, the acquisition processing unit 71 acquires an operation signal from at least an operating device 8 described below. In other words, when the operating device 8 including a first operating unit 81 and a second operating unit 82 outputs an operation signal in accordance with the operation of the operator (user), the acquisition processing unit 71 acquires the operation signal. Consequently, the control device 7 can cause the acquisition processing unit 71 to acquire, for example, the operation signal representing the presence or absence of and the manipulated variable of an operation on each of the first operating unit 81 and the second operating unit 82. Furthermore, the acquisition processing unit 71 acquires information (data) such as the driving speeds of the crawlers 111 from the traveling unit 11.

The travel processing unit 72 executes a travel control process of controlling the traveling unit 11 in accordance with the operation signal acquired by the acquisition processing unit 71. In the embodiment, the travel processing unit 72 applies at least one of a first mode and a second mode, and controls the traveling unit 11. The first mode is an operation mode in which an operation on the second operating unit 82 is disabled when the first operating unit 81 is unoperated. The second mode is an operation mode in which the base machine 10 rotates in the same direction in plan view in response to the same operation on the second operating unit 82 both when moving forward and when moving backward. In other words, the traveling unit 11 is controlled by the travel processing unit 72; therefore, the control device 7 can control the traveling unit 11 in accordance with the operation of the operator on the operating device 8, in other words, can drive the traveling unit 11 manually. The travel processing unit 72 changes the contents of control over the traveling unit 11 in response to an operation signal, depending on which operation mode is applied.

The switching processing unit 73 executes a mode switching process of switching the operation mode of the travel processing unit 72. Specifically, the switching processing unit 73 switches the operation modes of the travel processing unit 72 by switching between the application and non-application of each of the first mode and the second mode. Here, the travel processing unit 72 is simply required to be capable of applying at least one of the first mode and the second mode, and may apply only the first mode and may not apply the second mode, or may apply only the second mode and may not apply the first mode. Furthermore, the travel processing unit 72 may apply both the first mode and the second mode, or may apply neither the first mode nor the second mode. Moreover, the travel processing unit 72 may be capable of applying an operation mode (such as a third mode) other than the first mode and the second mode.

In the embodiment, as an example, the switching processing unit 73 switches between the application and non-application of at least one of the first mode and the second mode, by the operation of the user (operator). In other words, each of the application and non-application of the first mode and the application and non-application of the second mode is manually switched by, for example, the operation of the operator on the user interface 61. Moreover, in the embodiment, the switching processing unit 73 switches between the application and non-application of at least one of the first mode and the second mode, according to the travel speed of the base machine 10. In other words, each of the application and non-application of the first mode and the application and non-application of the second mode is automatically switched according to, for example, the travel speed of the base machine 10 represented by the driving speeds of the crawlers 111.

The correction processing unit 74 executes a correction process of correcting the controlled variable of the traveling unit 11 by the travel processing unit 72. Specifically, the correction processing unit 74 corrects the controlled variable of the traveling unit 11 in such a manner that the driving speeds of the crawlers 111 change non-linearly in response to the operation signal acquired by the acquisition processing unit 71. In the embodiment, the correction processing unit 74 corrects the controlled variable of the traveling unit 11 corresponding to the manipulated variable of at least one of the first operating unit 81 and the second operating unit 82 in such a manner that as the manipulated variable increases, the amount of change in the controlled variable for the amount of change in the manipulated variable increases. Consequently, for example, the amount of change in the driving speeds of the crawlers 111 for the manipulated variable of the operating device 8 reduces in a region where the manipulated variable of the operating device 8 is small, which facilitates fine adjustments to the travel speed of the traveling unit 11.

The spray processing unit 75 performs a spray control process related to the operation (the spray work) of, for example, the spraying device 4 and the airflow generating unit 5. Specifically, when the sprayer 1 starts traveling automatically at the work start position, the spray processing unit 75 outputs, to the spraying device 4, a switching signal that switches the spray patterns on the basis of control information included in a predetermined target path. When receiving the switching signal, the spraying device 4 executes the spray work in a predetermined spray pattern.

The automatic travel processing unit 76 causes the base machine 10 to automatically travel along the target path on the agricultural land F1 on the basis of, for example, positioning information acquired from the positioning device 2. Specifically, the automatic travel processing unit 76 causes the traveling unit 11 to automatically travel along the target path on the basis of positioning information including the position and direction of the base machine 10 that are determined by the positioning device 2. For example, when RTK positioning can be performed for the positioning information and the operator presses a start button (instructs to start automatic travel) on an operation screen of the operating terminal 201, the operating terminal 201 outputs an automatic travel start instruction (work start instruction) to the sprayer 1. When acquiring the automatic travel start instruction from the operating terminal 201, the automatic travel processing unit 76 starts the automatic travel of the sprayer 1 on the basis of the positioning information of the base machine 10 determined by the positioning device 2. Consequently, the sprayer 1 starts traveling automatically along the target path, and starts the spray work by means of the spraying device 4.

The communication terminal is a communication interface for connecting the sprayer 1 to a communication network in a wired or wireless manner and executing data communication pursuant to a predetermined communication protocol with external devices such as the operating terminal 201 and the server 202 via the communication network. Electronic equipment such as the positioning device 2, the control device 7, and the communication device is connected to the battery and can operate even during shutdown of the power source 63.

As illustrated in Fig. 5, the sprayer 1 according to the embodiment is communicable with the operating device 8, and causes the control device 7 (the acquisition processing unit 71) to acquire an operation signal that is outputted from the operating device 8 in response to the operation of the operator. (The control device 7 of) the sprayer 1 constitutes a control system 100 together with the operating device 8 for controlling the sprayer 1 manually. To put it differently, the control system 100 includes (the control device 7 of) the sprayer 1, and the operating device 8.

In the embodiment, the operating device 8 is connected to the control device 7 of the sprayer 1 by a cable having a sufficient length, and performs wired communication with the sprayer 1. Hence, the operator can operate the sprayer 1 manually by means of the operating device 8 without boarding the base machine 10 of the sprayer 1, for example, while standing around the base machine 10. Here, the operating device 8 may communicate wirelessly with the sprayer 1 by radio waves or light. Even in this case, the operator can operate the sprayer 1 manually by means of the operating device 8 from outside the base machine 10. In short, the operating device 8 can be operated outside the base machine 10. Hence, for example, when loading or unloading the sprayer 1 onto or from a transport vehicle, the operator can operate the sprayer 1 manually in a safe place outside the base machine 10.

Moreover, in the embodiment, the base machine 10 is provided with a storage unit 80 where the operating device 8 can be stored as illustrated in Fig. 11. The automatic travel processing unit 76 of the control device 7 starts the automatic travel of the sprayer 1 (the work machine) only when the operating device 8 is stored in the storage unit 80. In other words, when the operating device 8 is not used as in during the automatic travel of the sprayer 1, the operating device 8 can be stored in the storage unit 80 of the base machine 10, which leads to, for example, prevention of loss of the operating device 8. When the operating device 8 is not stored in the storage unit 80, the sprayer 1 does not start traveling automatically. Therefore, the operator can be trained to store the operating device 8 in the storage unit 80 of the base machine 10 when not using the operating device 8.

Specifically, the storage unit 80 is provided in the second block 10R as in, for example, the user interface 61. The user interface 61 includes the operating unit 612 that accepts an operation for adjustment related to the work (spray work), and the display unit 611 that displays information related to the operation. For example, the display unit 611 including a liquid crystal display is placed in a position close to the front end on the outer side surface (right side surface) of the second block 10R. For example, a knob or a push button switch as the operating unit 612 is placed below the display unit 611. The storage unit 80 is placed further below the operating unit 612 in the outer side surface (right side surface) of the second block 10R. The storage unit 80 is a recess having a size sufficient to store the operating device 8.

A contact or non-contact sensor (including a switch) is provided in the storage unit 80 to detect whether or not the operating device 8 is stored in the storage unit 80. A detection result of the sensor is acquired by (the acquisition processing unit 71 of) the control device 7. Only when the detection result of the sensor reveals that the operating device 8 is stored in the storage unit 80, the automatic travel processing unit 76 starts the automatic travel of the sprayer 1 after acquiring the automatic travel start instruction from the operating terminal 201. In other words, when the detection result of the sensor reveals that the operating device 8 is not stored in the storage unit 80, the automatic travel processing unit 76 does not start the automatic travel of the sprayer 1 even if acquiring the automatic travel start instruction from the operating terminal 201.

As illustrated in the balloon of Fig. 11, the operating device 8 includes the first operating unit 81, the second operating unit 82, a third operating unit 83, and an indicating unit 84. The first operating unit 81, the second operating unit 82, and the third operating unit 83 are various kinds of mechanical switches such as a lever switch, a slide switch, a joystick, a seesaw switch, and a push button switch. The operating device 8 includes a circuit board therein. When accepting an operation on the first operating unit 81, the second operating unit 82, or the third operating unit 83 from the operator, the operating device 8 outputs an operation signal (electric signal) in accordance with the operation. For example, when the operator operates the first operating unit 81 upward, the operating device 8 outputs an operation signal indicating that the first operating unit 81 has been operated upward.

The following operations are assigned to the first operating unit 81, the second operating unit 82, and the third operating unit 83, respectively. An operation for moving the base machine 10 forward and backward is assigned to the first operating unit 81 including a lever switch that can be operated in the vertical direction (up-and-down direction) as viewed from the operator. An operation for turning the base machine 10 to the left and to the right is assigned to the second operating unit 82 including a lever switch that can be operated in the horizontal direction (left-and-right direction) as viewed from the operator. An operation for enabling a manual travel mode for manually traveling the traveling unit 11 is assigned to the third operating unit 83 including a push button switch. The indicating unit 84 is, for example, an LED and is turned on when the manual travel mode is on.

In the embodiment, both the first operating unit 81 and the second operating unit 82 are lever type (stick type) operating tools. Therefore, for example, the first operating unit 81 can accept an operation of moving between a "neutral position" and a "forward position" or between the "neutral position" and a "backward position." Similarly, the second operating unit 82 can accept an operation of moving between the "neutral position" and a "right turn position" or between the "neutral position" and a "left turn position." Here, the "neutral position" is the neutral position. When the operator is not in contact with the first operating unit 81 and the second operating unit 82, both the first operating unit 81 and the second operating unit 82 return to the "neutral position." The "forward position" of the first operating unit 81 is a movable limit position on the upper side as viewed from the operator, and the "backward position" is a movable limit position on the lower side as viewed from the operator. The "right turn position" of the second operating unit 82 is a movable limit position on the right side as viewed from the operator, and the "left turn position" is a movable limit position on the left side as viewed from the operator. Hence, for example, when accepting, from the operator, an operation involving the movement of the first operating unit 81 from the "neutral position" toward the "forward position" (that is, the upper side), the operating device 8 outputs an operation signal in accordance with the manipulated variable (the amount of movement) of the first operating unit 81.

### [3] Details of Turn Operations

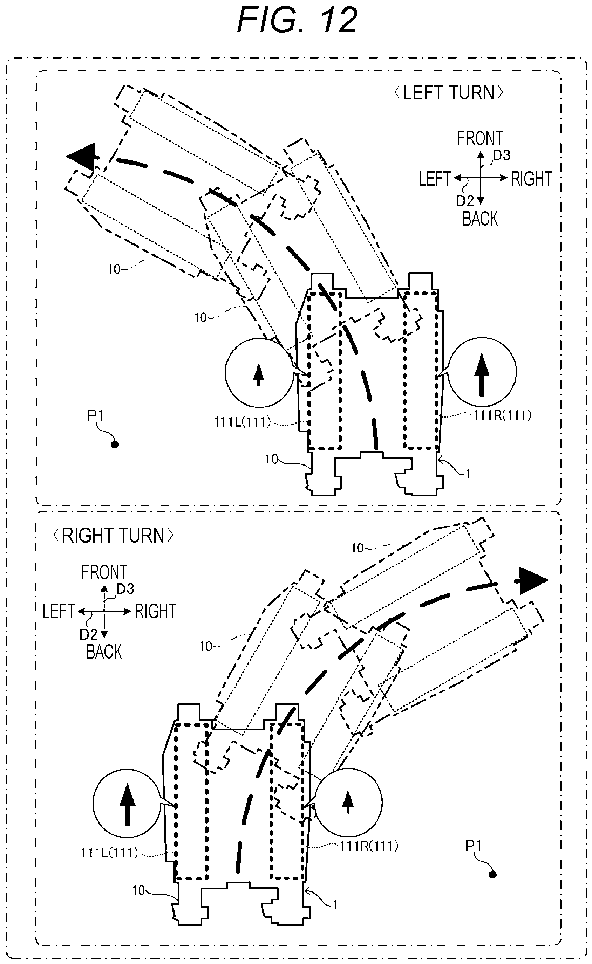

Next, turn operations of the sprayer 1 (the work machine) according to the embodiment are described in detail with reference to Figs. 12 to 15. Figs. 12 to 15 schematically illustrate the outer shape of the base machine 10 in plan view. The current base machine 10 is indicated by a solid line, and the base machine 10 after travel (a turn) is indicated by an imaginary line (chain double-dashed line). Moreover, in Figs. 12 to 15, a thick broken line arrow indicates a direction in which the base machine 10 moves, and a drive state of each of the pair of crawlers 111L and 111R is illustrated in balloons.

In the sprayer 1 (the work machine) according to the embodiment, the traveling unit 11 includes the pair of crawlers 111L and 111R aligned in the left-and-right direction D2 as described above and, therefore, can turn in a plurality of patterns. The term "turn" referred to herein means that the base machine 10 performs rotational motion in such a manner as to change the orientation (attitude) of the base machine 10 in plan view. In particular, when attention is given to the orientation of the base machine 10, a rotation that causes the front of the base machine 10 to face to the left, that is, a turn that rotates the base machine 10 counterclockwise, is referred to as a "left turn", and a rotation that causes the front of the base machine 10 to face to the right, that is, a turn that rotates the base machine 10 clockwise is referred to as a "right turn."

The turn patterns include a "gradual turn," a "pivot turn," and a "spin turn." Each of the turn patterns includes a "left turn" and a "right turn." Therefore, the sprayer 1 can execute six turns in total such as the "left turn" of the "gradual turn," the "right turn" of the "gradual turn," and the "right turn" of the "pivot turn."

The "gradual turn" is an operation of rotating the pair of crawlers 111L and 111R in the same direction at different rotational speeds to change direction while the base machine 10 draws an arc, moving forward or backward (reversing), and includes the above-mentioned forward turning state and backward turning state. In other words, as illustrated in Fig. 12, in the gradual turn, the base machine 10 rotates around an axis P1 set outside the base machine 10 in plan view, and the orientation (attitude) of the base machine 10 changes. The upper part of Fig. 12 illustrates by example the "left turn" of the gradual turn in which the base machine 10 rotates counterclockwise while moving forward by reducing the driving speed of the left crawler 111L as compared to the driving speed of the right crawler 111R while driving the pair of crawlers 111L and 111R in the forward direction. The lower part of Fig. 12 illustrates by example the "right turn" of the gradual turn in which the base machine 10 rotates clockwise while moving forward by reducing the driving speed of the right crawler 111R as compared to the driving speed of the left crawler 111L while driving the pair of crawlers 111L and 111R in the forward direction.

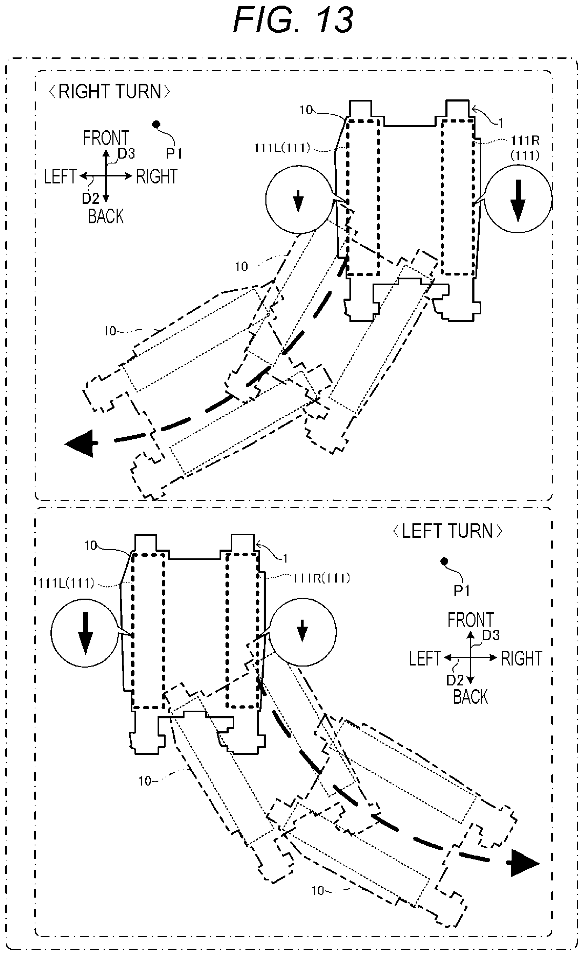

Moreover, Fig. 12 illustrates the forward turns in which the base machine 10 turns while moving forward. However, a backward turn of the gradual turn in which the base machine 10 turns while moving backward, similarly includes a "left turn" and a "right turn". In other words, as illustrated by example in the upper part of Fig. 13, the "right turn" is executed in which the base machine 10 rotates clockwise while moving backward by reducing the driving speed of the left crawler 111L as compared to the driving speed of the right crawler 111R while driving the pair of crawlers 111L and 111R in the backward direction. Similarly, as illustrated by example in the lower part of Fig. 13, the "left turn" is executed in which the base machine 10 rotates counterclockwise while moving backward by reducing the driving speed of the right crawler 111R as compared to the driving speed of the left crawler 111L while driving the pair of crawlers 111L and 111R in the backward direction. Here, in the "right turn" of the backward turn (the upper part of Fig. 13), the base machine 10 moves back to the left. However, the base machine 10 itself rotates in such a manner that the front of the base machine 10 faces to the right, that is, rotates clockwise, and thus, this turn is the "right turn." Similarly, in the "left turn" of the backward turn (the lower part of Fig. 13), the base machine 10 moves back to the right. However, the base machine 10 itself rotates in such a manner that the front of the base machine 10 faces to the left, that is, rotates counterclockwise, and thus, this turn is the "left turn."

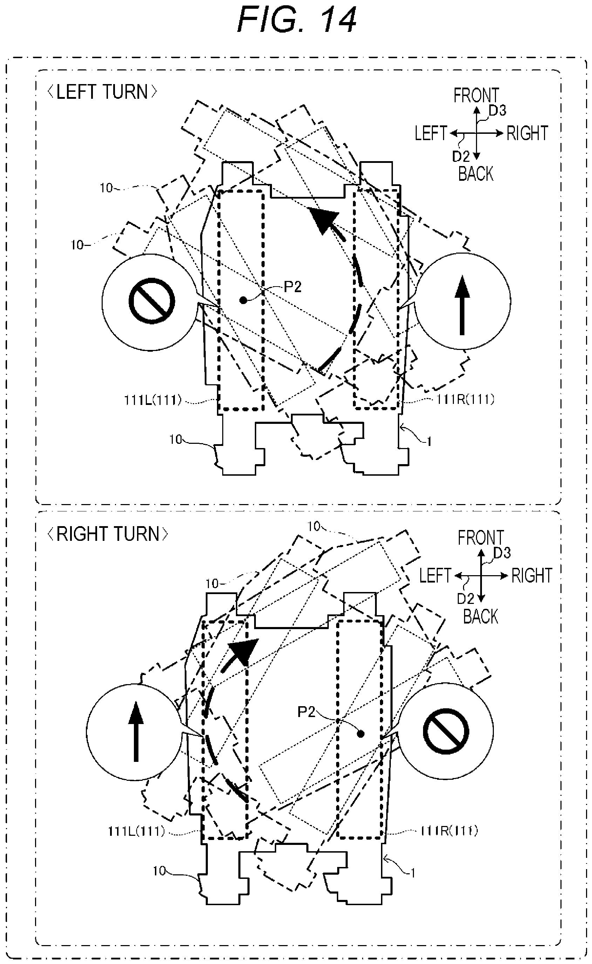

The "pivot turn" is an operation (a pivot turn) of stopping one crawler 111, rotating only the other crawler 111, and turning on the stopped crawler 111 as an axis (pivot). In other words, as illustrated in Fig. 14, in the pivot turn, the base machine 10 rotates on an axis P2 set in the vicinity of the center of the stopped crawler 111 (the left crawler 111L in Fig. 14) in plan view, and the orientation (attitude) of the base machine 10 changes. The upper part of Fig. 14 illustrates by example a state in which, in the pivot turn, the base machine 10 turns to the left (rotates counterclockwise) by stopping the drive of the left crawler 111L and driving the right crawler 111R in the forward direction. The lower part of Fig. 14 illustrates by example a state in which, in the pivot turn, the base machine 10 turns to the right (rotates clockwise) by stopping the drive of the right crawler 111R and driving the left crawler 111L in the forward direction.

Moreover, in Fig. 14, the driven crawler 111 is driven in the forward direction. However, the travel direction is not limited to the forward direction, and the "pivot turn" can be performed even if the driven crawler 111 is driven in the backward direction. For example, the drive of the left crawler 111L is stopped, and the right crawler 111R is driven in the backward direction. As a result, the "pivot turn" in which the base machine 10 turns to the right (rotates clockwise) is executed. Similarly, the drive of the right crawler 111R is stopped, and the left crawler 111L is driven in the backward direction; therefore, the "pivot turn" in which the base machine 10 turns to the left (rotates counterclockwise) is executed.

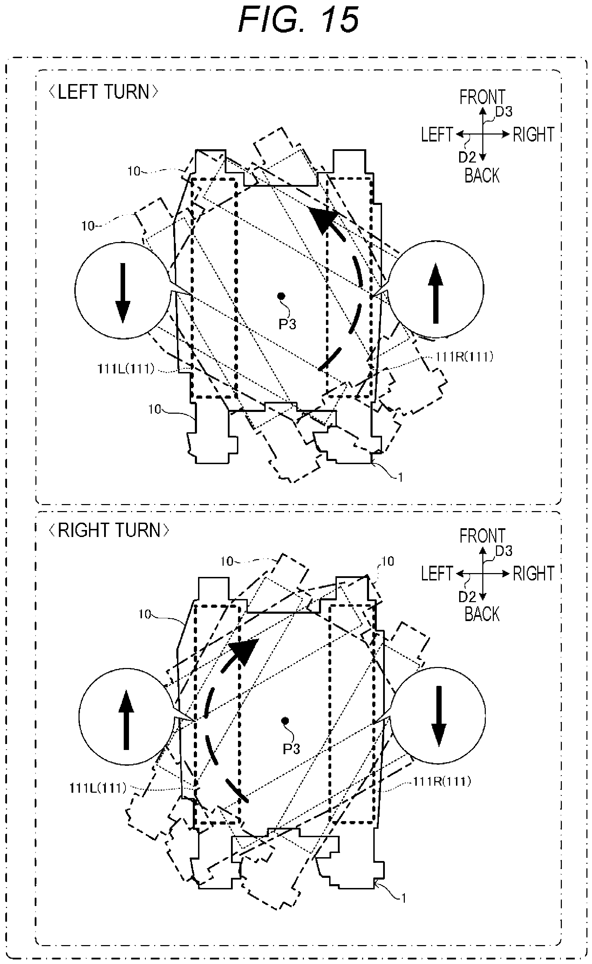

The "spin turn" is an operation (spin turn) of turning on the spot (an on-the-spot turn) about the center of the base machine 10 by rotating the pair of crawlers 111L and 111R at equal speeds in opposite directions to each other. In other words, as illustrated in Fig. 15, in the spin turn, the base machine 10 rotates about an axis P3 set in the vicinity of the center of the pair of the crawlers 111L and 111R in plan view, and the orientation (attitude) of the base machine 10 changes. The upper part of Fig. 15 illustrates by example a state in which, in the spin turn, the base machine 10 turns to the left (rotates counterclockwise) by driving the left crawler 111L in the backward direction and driving the right crawler 111R in the forward direction. The lower part of Fig. 15 illustrates by example a state in which, in the spin turn, the base machine 10 turns to the right (rotates clockwise) by driving the right crawler 111R in the backward direction and driving the left crawler 111L in the forward direction.

### [4] Method for Controlling Work Machine

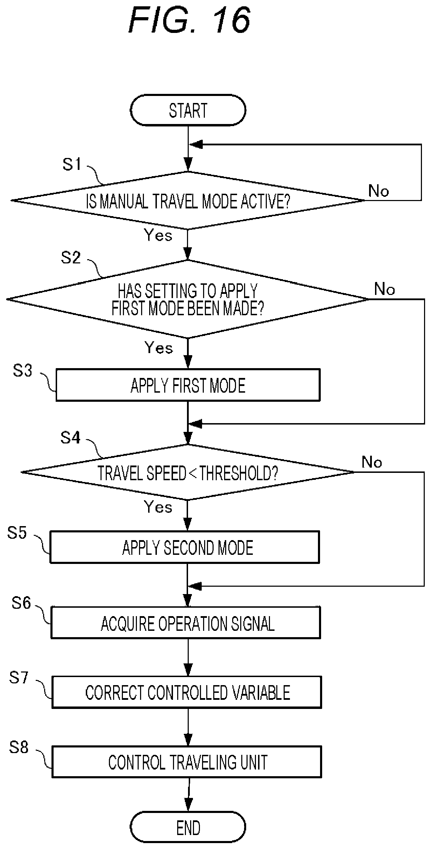

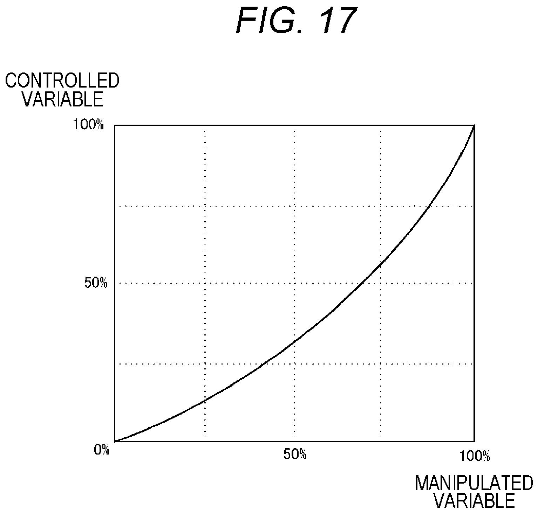

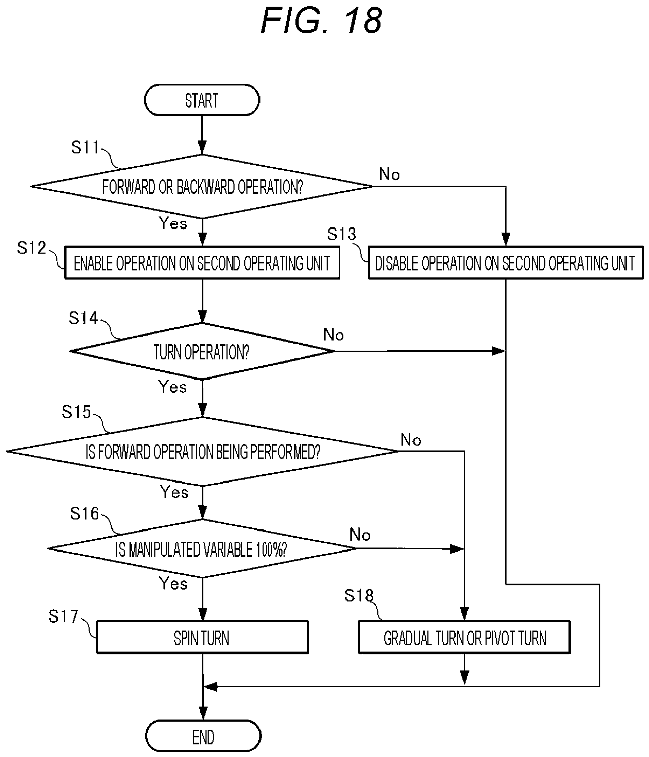

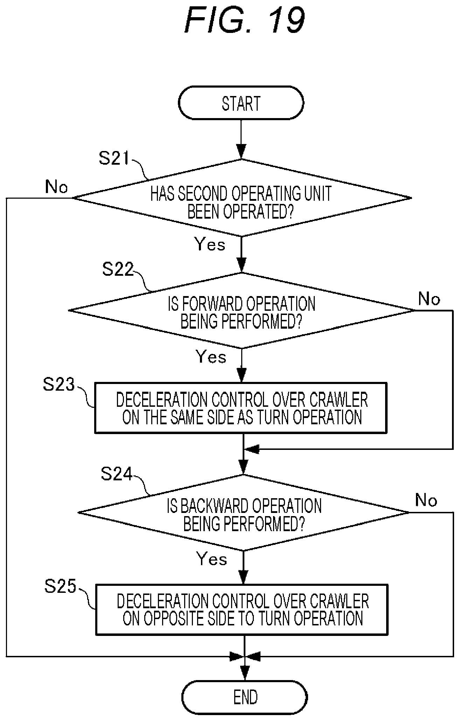

An example of a method for controlling the work machine (the sprayer 1), which is mainly executed by the control device 7, (hereinafter simply referred to as the "control method") is described below with reference to Figs. 16 to 19. Fig. 16 is a flowchart illustrating an example of the control method, particularly a process related to the manual travel mode. Fig. 17 is an explanatory diagram illustrating an example of a correction curve that is used in the correction processing unit 74. Fig. 18 is a flowchart illustrating an example of the control method, particularly a process related to control over the traveling unit 11 in a case where the first mode is applied. Fig. 19 is a flowchart illustrating an example of the control method, particularly a process related to control over the traveling unit 11 in a case where the second mode is applied. However, the flowcharts illustrated in Figs. 16, 18, and 19 are merely examples, and a process may be added or omitted as appropriate, or the order of the processes may be changed as appropriate.

The control method according to the embodiment is executed by the control device 7 mainly including the computer system. To put it differently, the control method is embodied by a control program of the work machine (the sprayer 1) (hereinafter simply referred to as the "control program"). In other words, the control program according to the embodiment is a computer program for causing one or more processors to execute each process related to the control method. Such a control program may be executed in cooperation with, for example, the control device 7 and the operating device 8.

Here, when a specific manual travel mode start operation that enables the manual travel mode is performed, the control device 7 enables the manual travel mode and executes the following various processes related to the manual travel mode. The manual travel mode start operation is, for example, a hold-down operation of keeping pressing the third operating unit 83 of the operating device 8 for a fixed period of time (for example, one second) while a key switch that starts the engine (the power source 63) of the sprayer 1 is on. On the other hand, when a preset specific manual travel mode end operation is performed, the control device 7 disables the manual travel mode and ends the following various processes related to the manual travel mode. The manual travel mode end operation is, for example, an operation of pressing the third operating unit 83 of the operating device 8.

Moreover, a situation is assumed below in which, before the sprayer 1 is caused to start traveling automatically, the sprayer 1 is operated in the "manual travel mode" where the operator causes the sprayer 1 to travel by manual operation. For example, the operator may transport the sprayer 1 from a storage (such as a barn) to the agricultural land F 1 by means of a transport vehicle, cause the sprayer 1 to manually travel to a start position (work start position) of the automatic travel on the agricultural land F1, and then cause the sprayer 1 to start traveling automatically. In such a case, when the sprayer 1 is taken out of the storage and loaded onto the transport vehicle, and when the sprayer 1 is unloaded from the transport vehicle and moved to the start position, the operator causes the sprayer 1 to travel manually in the manual travel mode. However, the manual travel mode is not limited to such a case. For example, also when the chemical solution is supplied from a chemical solution supply vehicle to (the tank 64 of) the sprayer 1 in a chemical solution supply area outside the agricultural land F1, the operator causes the sprayer 1 to travel manually in the manual travel mode.

### General Process Related to Manual Travel Mode

As illustrated in Fig. 16, the enabling of the manual traveling mode triggers the control device 7 (S1: Yes), which starts processes from step S2 onward. Here, the control device 7 determines whether or not the manual travel mode is active, depending on whether or not the third operating unit 83 of the operating device 8 has been held down, and judges that the manual travel mode is active (S1: Yes) when the third operating unit 83 has been held down. When the third operating unit 83 has been held down to enable the manual travel mode, the indicating unit 84 of the operating device 8 is turned on. On the other hand, when the third operating unit 83 has not been held down, or when the third operating unit 83 of the operating device 8 has been operated while the manual travel mode is active, the control device 7 judges that the manual travel mode is inactive (S1: No). When the manual travel mode is disabled, the indicating unit 84 of the operating device 8 is turned off.

In this manner, the control method according to the embodiment includes switching between the active state where an operation on the operating device 8 is enabled and the inactive state where an operation on the operating device 8 is disabled, according to the operation state of the operating device 8. In short, if the manual travel mode is active (S1: Yes), it is the active state where an operation on the operating device 8 is enabled, and if the manual travel mode is inactive (S1: No), it is the inactive state where an operation on the operating device 8 is disabled. Consequently, the operator can freely switch between the active state where an operation on the operating device 8 is enabled and the inactive state where an operation on the operating device 8 is disabled.

In step S2, the switching processing unit 73 of the control device 7 determines whether or not a setting to apply the first mode has been made. In the embodiment, the switching processing unit 73 manually switches between the application and non-application of at least the first mode, by an operation of the operator. Specifically, if enabling/disabling of the first mode is set by an operation of the operator on the user interface 61. If the first mode is active, the switching processing unit 73 determines that the setting to apply the first mode has been made (S2: Yes), and causes the procedure to move on to step S3. On the other hand, if the first mode is inactive, the switching processing unit 73 determines that the setting to apply the first mode has not been made (S2: No), and causes the procedure to move on to step S4. In step S3, the switching processing unit 73 of the control device 7 applies the first mode as the operation mode of the travel processing unit 72.

In step S4, the switching processing unit 73 of the control device 7 determines whether or not the travel speed of the base machine 10 is less than a threshold. In the embodiment, the switching processing unit 73 automatically switches between the application and non-application of at least the second mode, according to the travel speed. Specifically, if the driving speeds of the crawlers 111 are less than a predetermined speed, the switching processing unit 73 determines that the travel speed of the base machine 10 is less than the threshold (S4: Yes), and causes the procedure to move on to step S5. On the other hand, if the driving speeds of the crawlers 111 are equal to or greater than the predetermined speed, the switching processing unit 73 determines that the travel speed of the base machine 10 is equal to or greater than the threshold (S4: No), and causes the procedure to move on to step S6. In step S5, the switching processing unit 73 of the control device 7 applies the second mode as the operation mode of the travel processing unit 72.

In step S6, the acquisition processing unit 71 of the control device 7 acquires an operation signal from the operating device 8. Here, the operation signal includes information on the presence or absence of an operation on and the manipulated variable of each of at least the first operating unit 81 and the second operating unit 82. In other words, the operation signal changes according to the operation of the operator on the operating device 8.

In step S7, the correction processing unit 74 of the control device 7 corrects a controlled variable for the manipulated variable included in the operation signal. Specifically, the correction processing unit 74 corrects the controlled variable of the traveling unit 11 in accordance with a correction curve such as illustrated by example in Fig. 17. In Fig. 17, the horizontal axis represents the manipulated variable of the first operating unit 81 (or the second operating unit 82), and the vertical axis represents the controlled variable of the traveling unit 11. In other words, the correction processing unit 74 corrects the controlled variable in such a manner that the driving speeds of the crawlers 111 change non-linearly with respect to the manipulated variable. In the embodiment, the correction processing unit 74 corrects the controlled variable of the traveling unit 11 corresponding to the manipulated variable of each of the first operating unit 81 and the second operating unit 82 in such a manner that as the manipulated variable increases, the amount of change in the controlled variable for the amount of change in the manipulated variable increases.

In step S8, the travel processing unit 72 of the control device 7 controls the traveling unit 11 on the basis of the corrected controlled variable. For example, if the first operating unit 81 has been operated from the neutral position toward the forward position when the second operating unit 82 is in an unoperated state, the travel processing unit 72 drives the pair of crawlers 111L and 111R in the forward direction at equal speeds, thereby controlling the traveling unit 11 in such a manner as to cause the base machine 10 to move forward. At this point in time, the driving speeds of the crawlers 111 are determined by a controlled variable corresponding to the manipulated variable of the first operating unit 81 from the neutral position. In other words, as the manipulated variable increases, the controlled variable also increases. Therefore, the driving speeds of the crawlers 111 increase, and the travel speed of the base machine 10 in the forward direction increases. Furthermore, in step S7, the controlled variable corresponding to the manipulated variable is corrected in accordance with the correction curve. Therefore, fine adjustments to the travel speed are facilitated particularly in the low speed region, and, for example, an operation such as delicate positioning of the base machine 10 is facilitated.

In step S8, a series of processes related to the control method ends. The control device 7 repeatedly executes the above processes in steps S1 to S8. Therefore, as long as the manual travel mode is active (S1: Yes), the traveling unit 11 is controlled in accordance with the operation on the operating device 8, and the sprayer 1 can travel manually.

The control method according to the embodiment is a method for controlling the work machine (the sprayer 1) including the traveling unit 11 having the pair of crawlers 111L and 111R aligned in the left-and-right direction D2. The control method includes: acquiring an operation signal from the operating device 8; and applying at least one of the first mode and the second mode and controlling the traveling unit 11 in accordance with the operation signal. The operating device 8 includes: the first operating unit 81 for causing the base machine 10 of the sprayer 1 to move forward and backward; and the second operating unit 82 for turning the base machine 10 to the left and to the right. The first mode is an operation mode in which an operation on the second operating unit 82 is disabled when the first operating unit 81 is unoperated. The second mode is an operation mode in which the base machine 10 rotates in the same direction in plan view in response to the same operation on the second operating unit 82 both when moving forward and when moving backward. The control (S8) over the traveling unit 11 upon application of the first mode is described in detail in the section "[4.2] First Mode." The control (S8) over the traveling unit 11 upon application of the second mode is described in detail in the section "[4.3] Second Mode."

Consequently, if fine adjustments to the orientation of the base machine 10 are required, for example, if the sprayer 1 is moved from, for example, a storage where the sprayer 1 is stored to a start position of automatic travel under control (for example, remote control) of the operator, particularly operability in turning the base machine 10 is easily improved. In other words, the first mode and/or the second mode are applied by the skill or preference of the operator, which facilitates fine adjustments to the orientation of the base machine 10 by the turn operation of the base machine 10, and particularly improves operability in turning the base machine 10.

### First Mode

The control (S8) over the traveling unit 11 upon application of the first mode, particularly a process related to the turn operation, is described in more detail below with reference to Fig. 18.

If the first mode is applied, the travel processing unit 72 of the control device 7 determines whether or not a forward or backward operation is being performed (S11). In the embodiment, the travel processing unit 72 determines whether or not the forward or backward operation is being performed on the basis of the state of the operation of the operator (user) on the first operating unit 81. In other words, if the first operating unit 81 is in the operated state, for example, if the first operating unit 81 is in a position other than the "neutral position," the travel processing unit 72 determines that the forward or backward operation is being performed (S11: Yes), and causes the procedure to move on to step S12. On the other hand, if the first operating unit 81 is in the unoperated state, for example, if the first operating unit 81 is in the "neutral position," the travel processing unit 72 determines that the forward or backward operation is not being performed (S11: No), and causes the procedure to move on to step S13. Here, it is assumed that a predetermined area including the "neutral position" in the movable range of the first operating unit 81 is a dead area. If the first operating unit 81 is in the dead area (in other words, if the manipulated variable of the first operating unit 81 is small), it can be determined that the first operating unit 81 is in the unoperated state.

In step S12, the travel processing unit 72 of the control device 7 enables an operation on the second operating unit 82. Consequently, the travel processing unit 72 can control the traveling unit 11 in such a manner as to turn the base machine 10 to the left or to the right according to the manipulated variable of the second operating unit 82.

On the other hand, in step S13, the travel processing unit 72 of the control device 7 disables an operation on the second operating unit 82. Consequently, the travel processing unit 72 does not perform control to turn the base machine 10 to the left or to the right regardless of the manipulated variable of the second operating unit 82. The travel processing unit 72 ends a series of processes related to the turn operation in step S13.

In step S14, the travel processing unit 72 of the control device 7 determines whether or not the turn (left turn or right turn) operation is being performed. In the embodiment, the travel processing unit 72 determines whether or not the turn operation is being performed on the basis of the state of the operation of the operator (user) on the second operating unit 82. In other words, if the second operating unit 82 is in the operated state, for example, if the second operating unit 82 is in a position other than the "neutral position," the travel processing unit 72 determines that the turn operation is being performed (S14: Yes), and causes the procedure to move on to step S15. On the other hand, if the second operating unit 82 is in the unoperated state, for example, if the second operating unit 82 is in the "neutral position," the travel processing unit 72 determines that the turn operation is not being performed (S14: No), and ends a series of processes related to the turn operation. Here, it is assumed that a predetermined area including the "neutral position" in the movable range of the second operating unit 82 is a dead area. If the second operating unit 82 is in the dead area (in other words, if the manipulated variable of the second operating unit 82 is small), it can be determined that the second operating unit 82 is in the unoperated state.

In step S15, the travel processing unit 72 of the control device 7 determines whether or not the forward operation is being performed. In the embodiment, the travel processing unit 72 determines whether or not the forward operation is being performed, on the basis of the state of the operation of the operator (user) on the first operating unit 81. In other words, if the first operating unit 81 has been operated from the "neutral position" toward the "forward position," the travel processing unit 72 determines that the forward operation is being performed (S15: Yes), and causes the procedure to move on to step S16. On the other hand, if the first operating unit 81 has not been operated toward the "forward position," for example, if the first operating unit 81 is in the "neutral position," the travel processing unit 72 determines that the forward operation is not being performed (S15: No), and causes the procedure to move on to step S18.

In step S16, the travel processing unit 72 of the control device 7 determines whether or not the manipulated variable of the second operating unit 82 is an upper limit value (100%). If the second operating unit 82 is at the limit in the direction of the "left turn position" or the "right turn position" in the movable range, the travel processing unit 72 determines that the manipulated variable of the second operating unit 82 is the upper limit value (S16: Yes), and causes the procedure to move on to step S17. On the other hand, if the second operating unit 82 has not reached the limit in the direction of the "left turn position" or the "right turn position" in the movable range, the travel processing unit 72 determines that the manipulated variable of the second operating unit 82 is not the upper limit value (S16: No), and causes the procedure to move on to step S18.

In step S17, the travel processing unit 72 of the control device 7 controls the traveling unit 11 in such a manner as to perform the spin turn. At this point in time, if the second operating unit 82 has been operated toward the "left turn position," the travel processing unit 72 performs the left turn of the spin turn by driving the left crawler 111L in the backward direction and driving the right crawler 111R in the forward direction as illustrated in the upper part of Fig. 15. On the other hand, if the second operating unit 82 has been operated toward the "right turn position," the travel processing unit 72 performs the right turn of the spin turn by driving the right crawler 111R in the backward direction and driving the left crawler 111L in the forward direction as illustrated in the lower part of Fig. 15. The travel processing unit 72 ends a series of processes related to the turn operation in step S17.

In step S18, the travel processing unit 72 of the control device 7 controls the traveling unit 11 in such a manner as to perform the gradual turn or pivot turn. At this point in time, if the forward operation is being performed (S15: Yes) and the second operating unit 82 has been operated toward the "left turn position," the travel processing unit 72 performs the left turn of the gradual turn by reducing the driving speed of the left crawler 111L as compared to the driving speed of the right crawler 111R while driving the pair of crawlers 111L and 111R in the forward direction as illustrated in the upper part of Fig. 12. On the other hand, if the forward operation is being performed (S15: Yes) and the second operating unit 82 has been operated toward the "right turn position," the travel processing unit 72 performs the right turn of the gradual turn by reducing the driving speed of the right crawler 111R as compared to the driving speed of the left crawler 111L while driving the pair of crawlers 111L and 111R in the forward direction as illustrated in the lower part of Fig. 12.

Moreover, in step S18, if the backward operation is being performed (S 15: No) and the second operating unit 82 has been operated toward the "left turn position," the travel processing unit 72 performs the right turn of the gradual turn by reducing the driving speed of the left crawler 111L as compared to the driving speed of the right crawler 111R while driving the pair of crawlers 111L and 111R in the backward direction as illustrated in the upper part of Fig. 13. On the other hand, if the backward operation is being performed (S15: No) and the second operating unit 82 has been operated toward the "right turn position," the travel processing unit 72 performs the left turn of the gradual turn by reducing the driving speed of the right crawler 111R as compared to the driving speed of the left crawler 111L while driving the pair of crawlers 111L and 111R in the backward direction as illustrated in the lower part of Fig. 13.

Furthermore, in step S 18, if the first operating unit 81 is at the limit in the direction of the "backward position" in the movable range (the backward manipulated variable is an upper limit value), and the second operating unit 82 has been operated toward the "left turn position," the travel processing unit 72 performs the left turn of the pivot turn by stopping the drive of the right crawler 111R and driving the left crawler 111L in the backward direction. On the other hand, if the first operating unit 81 is at the limit in the direction of the "backward position" in the movable range (the backward manipulated variable is the upper limit value), and the second operating unit 82 has been operated toward the "right turn position," the travel processing unit 72 performs the right turn of the pivot turn by stopping the drive of the left crawler 111L and driving the right crawler 111R in the backward direction to . The travel processing unit 72 ends a series of processes related to the turn operation in step S18.

In this manner, if the first operating unit 81 is unoperated in the first mode (S11: No), an operation on the second operating unit 82 is disabled (S13). Therefore, in the first mode, the turn operation of the base machine 10 is not performed when the first operating unit 81 is in the unoperated state. Consequently, it is possible to avoid a significant change in the orientation (attitude) of the base machine 10 due to a sudden spin turn.

Furthermore, if the operation state of the first operating unit 81 satisfies a specific condition during application of the first mode, when the manipulated variable of the second operating unit 82 increases to or above a predetermined value, it is possible to perform the spin turn in which the pair of crawlers 111L and 111R is rotated in opposite directions to each other. In the embodiment, as an example, the specific condition includes that the first operating unit 81 has been operated toward the "forward position," in other words, the forward operation is being performed (S15: Yes). Moreover, the predetermined value set for the manipulated variable of the second operating unit 82 is 100%. When the manipulated variable of the second operating unit 82 reaches the predetermined value (100%) (S16: Yes), it is determined that the manipulated variable of the second operating unit 82 is equal to or greater than the predetermined value. As a result, the spin turn can be performed. However, the predetermined value is not limited to 100%. If the predetermined value is, for example, 90%, when the manipulated variable of the second operating unit 82 is within a range from equal to or greater than 90% to equal to or less than 100% (for example, 95%), it is determined that the manipulated variable of the second operating unit 82 is equal to or greater than the predetermined value. As a result, the spin turn can be performed. Therefore, the spin turn can be performed also during application of the first mode under a specific situation, which leads to a further improvement in operability.

Here, the specific condition is not limited to that the forward operation is being performed, and may include that the first operating unit 81 has been operated regardless of forward movement or backward movement, that the manipulated variable of the first operating unit 81 is equal to or greater than a predetermined value, or that the first operating unit 81 keeps being operated for a predetermined period of time or more.

### Second Mode

The control (S8) over the traveling unit 11 upon application of the second mode, particularly a process related to the turn operation, is described in more detail below with reference to Fig. 19.

If the second mode is applied, the travel processing unit 72 of the control device 7 determines whether or not the second operating unit 82 has been operated (S21). In the embodiment, the travel processing unit 72 determines whether or not the second operating unit 82 has been operated, on the basis of the state of the operation of the operator (user) on the second operating unit 82. In other words, if the second operating unit 82 is in a state that is determined to have been operated, for example, if the second operating unit 82 is in a position other than the "neutral position" (S21: Yes), the travel processing unit 72 causes the procedure to move on to step S22. On the other hand, if the second operating unit 82 is in a state that is determined to be unoperated, for example, if the second operating unit 82 is in the "neutral position" (S21: No), the travel processing unit 72 ends a series of processes related to the turn operation. Here, it is assumed that a predetermined area including the "neutral position" in the movable range of the second operating unit 82 is a dead area. If the second operating unit 82 is in the dead area (in other words, if the manipulated variable of the second operating unit 82 is small), it can be determined that the second operating unit 82 is in the unoperated state.

In step S22, the travel processing unit 72 of the control device 7 determines whether or not the forward operation is being performed. In the embodiment, the travel processing unit 72 determines whether or not the forward operation is being performed, on the basis of the state of the operation of the operator (user) on the first operating unit 81. In other words, if the first operating unit 81 has been operated from the "neutral position" toward the "forward position," the travel processing unit 72 determines that the forward operation is being performed (S22: Yes), and causes the procedure to move on to step S23. On the other hand, if the first operating unit 81 has not been operated toward the "forward position," for example, if the first operating unit 81 is in the "neutral position," the travel processing unit 72 determines that the forward operation is not being performed (S22: No), and causes the procedure to move on to step S24.

In step S23, the travel processing unit 72 of the control device 7 performs deceleration control over the crawler 111 on the same side as the turn operation. For example, if the second operating unit 82 has been operated toward the "left turn position," the travel processing unit 72 performs the left turn of the gradual turn by reducing the driving speed of the left crawler 111L as compared to the driving speed of the right crawler 111R while driving the pair of crawlers 111L and 111R in the forward direction as illustrated in the upper part of Fig. 12. For example, if the second operating unit 82 has been operated toward the "right turn position," the travel processing unit 72 performs the right turn of the gradual turn by reducing the driving speed of the right crawler 111R as compared to the driving speed of the left crawler 111L while driving the pair of crawlers 111L and 111R in the forward direction as illustrated in the lower part of Fig. 12.

Furthermore, the amount of deceleration of the crawler 111 targeted for the deceleration control is determined according to the manipulated variable of the second operating unit 82. In other words, as the manipulated variable of the second operating unit 82 increases, the amount of deceleration of the crawler 111 targeted for the deceleration control increases, and if the manipulated variable of the second operating unit 82 is the upper limit value (100%), the crawler 111 targeted for the deceleration control stops. Hence, if the second operating unit 82 has been operated to the limit position in the direction of the "left turn position," the travel processing unit 72 performs the right turn of the pivot turn by stopping the drive of the right crawler 111R and driving the left crawler 111L in the forward direction as illustrated in the lower part ofFig. 14.

In step S24, the travel processing unit 72 of the control device 7 determines whether or not the backward operation is being performed. In the embodiment, the travel processing unit 72 determines whether or not the backward operation is being performed, on the basis of the state of the operation of the operator (user) on the first operating unit 81. In other words, if the first operating unit 81 has been operated from the "neutral position" toward the "backward position," the travel processing unit 72 determines that the backward operation is being performed (S24: Yes), and causes the procedure to move on to step S25. On the other hand, if the first operating unit 81 has not been operated toward the "backward position," for example, if the first operating unit 81 is in the "neutral position," the travel processing unit 72 determines that the backward operation is not being performed (S24: No), and ends a series of processes related to the turn operation.

In step S25, the travel processing unit 72 of the control device 7 performs the deceleration control over the crawler 111 on the opposite side to the turn operation. For example, if the second operating unit 82 has been operated toward the "left turn position," the travel processing unit 72 performs the left turn of the gradual turn by reducing the driving speed of the right crawler 111R as compared to the driving speed of the left crawler 111L while driving the pair of crawlers 111L and 111R in the backward direction as illustrated in the lower part of Fig. 13. On the other hand, if the second operating unit 82 has been operated toward the "right turn position," the travel processing unit 72 performs the right turn of the gradual turn by reducing the driving speed of the left crawler 111L as compared to the driving speed of the right crawler 111R while driving the pair of crawlers 111L and 111R in the backward direction as illustrated in the upper part of Fig. 13.

Furthermore, the amount of deceleration of the crawler 111 targeted for the deceleration control is determined according to the manipulated variable of the second operating unit 82. In other words, as the manipulated variable of the second operating unit 82 increases, the amount of deceleration of the crawler 111 targeted for the deceleration control increases, and if the manipulated variable of the second operating unit 82 is the upper limit value (100%), the crawler 111 targeted for the deceleration control stops. Hence, if the second operating unit 82 has been operated to the limit position in the direction of the "left turn position," the travel processing unit 72 performs the left turn of the pivot turn by stopping the drive of the left crawler 111L and driving the right crawler 111R in the forward direction as illustrated in the upper part of Fig. 14. The travel processing unit 72 ends a series of processes related to the turn operation in step S13.

In this manner, in the second mode, the base machine 10 rotates in the same direction (turns to the left or to the right) in plan view in response to the same operation on the second operating unit 82 both when moving forward and when moving backward. In other words, if the second mode is not applied, even when the second operating unit 82 has been operated toward the "left turn position" in the same manner as described in step S18 of the first mode, a left turn is performed while the forward operation is being performed, whereas a right turn is performed while the backward operation is being performed. On the other hand, if the second mode is applied, when the second operating unit 82 has been operated to the "left turn position" in the same manner, a left turn is performed regardless of whether the forward operation or the backward operation is being performed. Therefore, in the second mode, the operator can intuitively perform the turn operation on the base machine 10 at the time of a "three-point turn" performed to turn the base machine 10 around, moving alternately forward and backward, and can avoid an unintended change in the direction (attitude) of the base machine 10.

Moreover, in the second mode, an operation on the second operating unit 82 is not disabled even when the first operating unit 81 is unoperated as in the first mode. Hence, if the second operating unit 82 has been operated (S21: Yes) and the first operating unit 81 is unoperated (S22: No and S24: No), the travel processing unit 72 performs the spin turn.

### [5] Modifications

Modifications of the first embodiment are listed below. The modifications described below can be applied in combination as appropriate.

The control device 7 in the present disclosure includes the computer system. The computer system mainly includes one or more processors and one or more memories as hardware. The processor executes a program recorded in the memory of the computer system to implement a function as the control device 7 in the present disclosure. The program may be prerecorded in the memory of the computer system, may be provided through a telecommunication line, or may be recorded and provided in a non-transitory recording medium, such as a memory card, an optical disk, or a hard disk drive, that is readable by the computer system. Moreover, a part or all of the functional units included in the control device 7 may be configured of an electronic circuit.

Moreover, it is not an essential configuration for the control device 7 that at least a part of the functions of the control device 7 are aggregated in one housing. The components of the control device 7 may be dispersedly provided in a plurality of housings. Conversely, in the control device 7, the functions distributed over a plurality of devices (for example, the control device 7 and the operating device 8) may be aggregated in one housing. Furthermore, at least a part of the functions of the control device 7 may be achieved by, for example, a cloud (cloud computing).

The sprayer 1 may be used for work in not limited to an orchard such as a vineyard or an apple orchard but other agricultural lands F1, or work target areas other than the agricultural land F1. Furthermore, the spray substance to be sprayed by the sprayer 1 is not limited to the chemical solution, and may be, for example, water, a fertilizer, an antiseptic solution, or other liquids, or powder. Similarly, the spray target onto which the sprayed substance is sprayed is not limited to grapevine fruits, and may be other crops or objects other than crops (including inorganic substances). Moreover, the sprayer 1 is not limited to an unmanned vehicle that operates by automatic operation, and the sprayer 1 may be configured in such a manner as to operate under control (including remote control) of a person (operator), and may be, for example, a boarding type (manned vehicle) that an operator can board. Also in this case, the sprayer 1 is provided with, for example, the antenna 21 to grasp the current position of the sprayer 1.

Moreover, it is not essential to be switchable between the application and non-application of the each of the first mode and the second mode. For example, at least one of the first mode and the second mode may or may not be applied all the time. In this case, the switching processing unit 73 can be omitted.

Moreover, the support frame 3 is simply required to be attached to one end of the base machine 10 in the front-and-back direction D3, and may be attached at the front of the base machine 10. In this case, the work unit (the spray nozzles 41) supported by the support frame 3 is also placed not at the back but at the front of the base machine 10.

Moreover, the sprayer 1 may include a pair of the spraying devices 4 aligned in the front-and-back direction D3. Consequently, the sprayer 1 can execute the work (spray work) with each of the pair of the spraying devices 4 (work units) aligned in the front-and-back direction D3, and can promote an improvement in work efficiency as compared to a case where the work is performed by use of only one of the spraying devices 4. Moreover, the sprayer 1 may further include a rotary drive device that generates a rotational force that rotates the support frame 3 relative to the base machine 10 about the rotation axis Ax1.

Moreover, the base machine 10 is simply required to have the first block 10L and the second block 10R, which are aligned in the left-and-right direction D2, and the arrangement of the first block 10L and the second block 10R may be reversed in the left-and-right direction. In other words, the first block 10L provided with, for example, the power source 63 may be located on the right side, and the second block 10R provided with, for example, the user interface 61 may be located on the left side.

Moreover, the traveling unit 11 is not limited to a crawler traveling device, and, for example, may be configured in such a manner as to include one or more wheels and travel by rotation of the wheels. Moreover, the traveling unit 11 is not limited to a configuration driven by a hydraulic motor, and may be configured in such a manner as to be driven by an electric motor.

Moreover, the sprayer 1 is not limited to an air-assisted sprayer as in the first embodiment, and may be, for example, an electrostatic spraying system, or a system that is a combination of an air-assisted system and an electrostatic spraying system. In the sprayer 1 of an electrostatic spraying system, the airflow generating unit 5 can be omitted.

Moreover, the power source 63 is not limited to an engine, and may include, for example, a motor (electric motor), or may be a hybrid power source including an engine and a motor.

Moreover, the sprayer 1 may be configured in such a manner that the base machine 10 does not have a portal frame shape and the entire base machine 10 travels between a pair of the adjacent crop rows Vr1 (along the work pathway). In this case, the sprayer 1 travels along each work pathway without standing astride the crop row Vr1. In this case, the spraying device 4 performs the spray work, switching between a spray pattern that sprays the chemical solution in both ways in the left-and-right direction D2, a spray pattern that sprays the chemical solution only to the left, and a spray pattern that sprays the chemical solution only on the right.

Moreover, the antennas 21 and 22 are not limited to position determination antennas, and may be, for example, wireless communication antennas. Furthermore, the antennas 21 and 22 are not limited to for reception, and may be for transmission, or for reception and transmission.

Moreover, the user interface 61 may have, for example, a means for presenting information to the user by, for example, audio output, in addition to or instead of the display unit 611. Furthermore, at least one of the adjustment items (such as flow rate and pressure) may be automatically adjusted by the control device by means of the operating unit 612 of the user interface 61. In this case, the operating unit 612 can be omitted as appropriate, and the user interface 61 may only display an adjustment result on the display unit 611.

Moreover, in the first embodiment, the sprayer 1 is described as an example of the work machine. However, the work machine is not limited to the sprayer 1. For example, the work machine may be a pinching machine. In this case, a pinching unit that performs pinching work is an example of the work unit and is supported by the support frame 3.

### LIST OF REFERENCE SIGNS

- 1: Sprayer (work machine)
- 8: Operating device
- 10: Base machine
- 11: Traveling unit
- 71: Acquisition processing unit
- 72: Travel processing unit
- 80: Storage unit
- 81: First operating unit
- 82: Second operating unit
- 111 (111L, 111R): Crawler
- D2: Left-and-right direction

## Claims

1. A method for controlling a work machine that includes a traveling unit that has a pair of crawlers aligned in a left-and-right direction, the method comprising:
acquiring an operation signal from an operating device that includes a first operating unit configured to move a base machine of the work machine forward and backward, and a second operating unit configured to turn the base machine to the left and to the right; and
applying at least one of a first mode in which an operation on the second operating unit is disabled upon the first operating unit being unoperated and a second mode in which the base machine rotates in the same direction in plan view in response to the same operation on the second operating unit both upon moving forward and upon moving backward, and controlling the traveling unit in accordance with the operation signal.

2. The method for controlling the work machine according to claim 1, wherein upon an operation state of the first operating unit satisfying a specific condition under application of the first mode, a manipulated variable of the second operating unit that is a predetermined value or greater enables a spin turn that rotates the pair of crawlers in opposite directions to each other.

3. The method for controlling the work machine according to claim 1 or 2, further comprising switching between an active state in which an operation on the operating device is enabled and an inactive state in which an operation on the operating device is disabled, according to the operation state of the operating device.

4. The method for controlling the work machine according to any of claims 1 to 3, wherein the operating device is operable outside the base machine.

5. The method for controlling the work machine according to claim 4, wherein
the base machine is provided with a storage unit capable of storing the operating device, and
the method further comprises causing the work machine to start traveling automatically only upon the operating device being stored in the storage unit.

6. The method for controlling the work machine according to any of claims 1 to 5, further comprising correcting a controlled variable of the traveling unit corresponding to a manipulated variable of at least one of the first operating unit and the second operating unit in such a manner that as the manipulated variable increases, the amount of change in the controlled variable for the amount of change in the manipulated variable increases.

7. The method for controlling the work machine according to any of claims 1 to 6, wherein application and non-application of at least one of the first mode and the second mode are switched by a user operation.

8. The method for controlling the work machine according to any of claims 1 to 7, wherein the application and non-application of the at least one of the first mode and the second mode are switched according to a travel speed of the base machine.

9. A work machine control program for causing one or more processors to execute the method for controlling the work machine according to any of claims 1 to 8.

10. A work machine comprising:
a base machine;
a traveling unit that includes a pair of crawlers aligned in a left-and-right direction;
an acquisition processing unit that acquires an operation signal from an operating device that includes a first operating unit configured to move the base machine forward and backward, and a second operating unit configured to turn the base machine to the left and to the right; and
a travel processing unit that applies at least one of a first mode in which an operation on the second operating unit is disabled upon the first operating unit being unoperated, and a second mode in which the base machine rotates in the same direction in plan view in response to the same operation on the second operating unit both upon moving forward and upon moving backward, and controls the traveling unit in accordance with the operation signal.
